(19) Europäisches Patentamt / European Patent Office / Office européen des brevets

(11) EP 3 474 048 A1

(12) # EUROPEAN PATENT APPLICATION
published in accordance with Art. 153(4) EPC

(43) Date of publication:
**24.04.2019 Bulletin 2019/17**

(21) Application number: **17813132.2**

(22) Date of filing: **31.05.2017**

(51) Int Cl.:
***G02B 5/28*** (2006.01) ***B32B 7/02*** (2019.01)
***B32B 27/20*** (2006.01) ***B60J 1/00*** (2006.01)
***C03C 27/12*** (2006.01) ***G02B 5/22*** (2006.01)

(86) International application number:
**PCT/JP2017/020264**

(87) International publication number:
**WO 2017/217230 (21.12.2017 Gazette 2017/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.06.2016 JP 2016118781**

(71) Applicant: **Nippon Kayaku Kabushiki Kaisha**
**Tokyo 100-0005 (JP)**

(72) Inventors:
- **HARA, Yukihiro**
**Tokyo 115-8588 (JP)**
- **ARIFUKU, Michiharu**
**Tokyo 115-8588 (JP)**
- **EBIHARA, Shoko**
**Tokyo 115-8588 (JP)**
- **NOHARA, Akihiro**
**Tokyo 115-8588 (JP)**

(74) Representative: **Ter Meer Steinmeister & Partner**
**Patentanwälte mbB**
**Nymphenburger Straße 4**
**80335 München (DE)**

(54) **INFRARED-SHIELDING SHEET, INTERLAYER FILM FOR INFRARED-SHIELDING LAMINATED GLASS, AND INFRARED-SHIELDING LAMINATED GLASS AND METHOD FOR MANUFACTURING SAME**

(57) There is provided a new infrared-shielding sheet that has been improved to a large extent in terms of transparency in the visible light region, radio-wave transparency, infrared shielding properties, production cost, and hue. The infrared-shielding sheet includes: a laminated film having high-refractive index resin layers containing fine particles and low-refractive index resin layers containing fine particles alternately laminated therein; and an infrared-absorbent pigment layer containing an infrared-absorbent pigment having a visible light transmittance of 70% or greater and a b* value in the L*a*b* color system of 10 or less, wherein for at least one layer of the low-refractive index resin layers, a value obtained by subtracting the refractive index at an arbitrary wavelength in the range of 780 nm to 2,500 nm from the refractive index at a wavelength of 550 nm is 0.1 or greater, and the low-refractive index resin layers exhibit a lower refractive index than the high-refractive index resin layers at any arbitrary wavelength longer than or equal to 550 nm and shorter than or equal to the arbitrary wavelength.

[Figure 4]

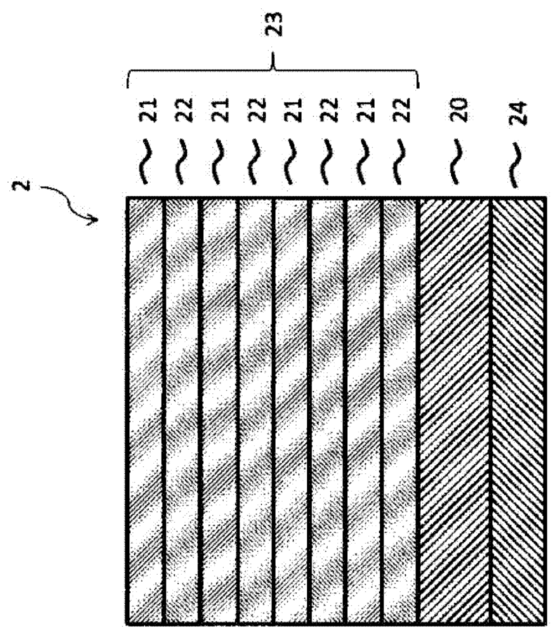




Printed by Jouve, 75001 PARIS (FR)

## Description

### Technical Field

The present invention relates to a new infrared-shielding sheet capable of efficiently absorbing and reflecting infrared radiation and having excellent transparency and low haze properties, a method for producing the same, and uses of the same (interlayer film for glass, laminated glass, and window member).

### Background Art

In recent years, there has been a demand to reduce the work load of air conditioning machines, from the viewpoint of energy saving and global environmental problems. For example, in the fields of housing and automotive, it is required to lay on a window glass an infrared-shielding material that is capable of shielding infrared radiation from solar light, and to control the temperature inside a room or inside a car.

There is a variety of materials having infrared shielding properties; however, Patent Literature 1 discloses a highly heat-insulating laminated glass in which an infrared-reflective film formed from a multilayer film having a high-refractive index layer and a low-refractive index layer alternately laminated therein (dielectric multilayer film), and a functional laminate interlayer film formed by uniformly dispersing electroconductive ultrafine particles capable of shielding infrared radiation, such as antimony-doped tin oxide (particulate film), are laminated between at least two sheets of glass substrates facing each other in order to reflect light rays having particular wavelengths in the infrared region. This highly heat-insulating laminated glass has a problem with the production cost because the dielectric multilayer film and the particulate film need to be formed separately.

Patent Literature 2 discloses a laminated glass for a vehicle window, in which a laminate coating film having a high-refractive index inorganic material layer and a low-refractive index inorganic material layer alternately laminated therein (dielectric multilayer film), and an interlayer film having infrared-shielding fine particles of ITO (tin-doped indium oxide) or the like dispersively mixed therein are laminated between a first glass plate and a second glass plate in order to reflect light rays having particular wavelengths in the infrared region. This laminated glass for a vehicle window has a problem with the production cost because the dielectric multilayer film and the particulate film need to be formed separately.

Patent Literature 3 discloses a heat-insulating glass in which a transparent electroconductive layer, and a high-refractive index layer having a refractive index in the infrared region that is relatively higher than the refractive index of the transparent electroconductive layer are alternately laminated on a glass substrate. However, in this heat-insulating glass, since a layer formed only from a conductor is used as a low-refractive index layer in the infrared region, there is a problem that the heat-insulating glass may not be used for a system in which radio-wave transmission performance for implementing transmission and reception of radio-waves such as mobile telephone radio-waves, television radio-waves, and GPS (global positioning system) radio-waves indoors and outdoors is required. Furthermore, this heat-insulating glass has a problem with the production cost because a vacuum facility such as a sputtering apparatus is needed to form a layer formed only from a conductor.

Patent Literature 4 discloses an infrared-shielding sheet in which layers having different refractive indices depending on the wavelength are laminated on a transparent support, and infrared-absorbent pigments are combined. However, there is no description on the hues of the infrared-absorbent pigments used in this infrared-shielding sheet, and since the dyes used in the Examples have intense yellow color, the external appearance of this infrared-shielding sheet is not readily acceptable.

Patent Literature 5 discloses an infrared heat-shielding sheet in which a high-refractive index resin layer and a low-refractive index resin layer are alternately laminated. However, there are no specific descriptions and Examples showing that performances are enhanced compared to conventional cases, by using copper naphthalocyanine or KAYASORB IR-750 as an infrared-absorbent pigments in this infrared heat-shielding sheet, and further including a green glass.

### Citation List

#### Patent Literature

Patent Literature 1: JP 2002-220262 A
Patent Literature 2: WO 2007/020791 A
Patent Literature 3: JP 2010-202465 A

Patent Literature 4: JP 2015-127274 A
Patent Literature 5: JP 2014-224921 A

Summary of Invention

Technical Problem

It is an object of the present invention to provide a new infrared-shielding sheet that has been improved to a large extent in terms of transparency in the visible light region, radio-wave transparency, infrared shielding properties, production cost, and hue.

Solution to Problem

The inventors of the present invention conducted a thorough investigation on such problems of the prior art technologies, and as a result, the present inventors found that when an infrared-shielding sheet including a laminated film in which high-refractive index resin layers containing fine particles and low-refractive index resin layers containing fine particles are alternately laminated, is configured such that in at least one layer of the low-refractive index resin layers, the value obtained by subtracting the refractive index at an arbitrary wavelength in the range of 780 nm to 2,500 nm from the refractive index at a wavelength of 550 nm is 0.1 or greater, and the low-refractive index resin layers exhibit a lower refractive index than the high-refractive index resin layer at any wavelength longer than or equal to 550 nm and shorter than or equal to the aforementioned arbitrary wavelength, and when the laminated film is combined with an infrared-absorbent pigment layer containing an infrared-absorbent pigment having a visible light transmittance of 70% or greater and a b* value of 10 or less in the L*a*b* color system (hereinafter, infrared-absorbent pigment layer), a new infrared-shielding sheet having transparency and radio-wave transparency and also having been improved to a large extent in terms of the production cost, infrared shielding properties, and external appearance, may be realized. Thus, the present inventors completed the present invention.

That is, an infrared-shielding sheet of the present invention is related to:

(1) an infrared-shielding sheet, including: a laminated film having high-refractive index resin layers containing fine particles and low-refractive index resin layers containing fine particles alternately laminated therein; and an infrared-absorbent pigment layer containing an infrared-absorbent pigment having a visible light transmittance of 70% or greater and a b* value in the L*a*b* color system of 10 or less, wherein for at least one layer of the low-refractive index resin layers, a value obtained by subtracting the refractive index at an arbitrary wavelength in the range of 780 nm to 2,500 nm from the refractive index at a wavelength of 550 nm is 0.1 or greater, and the low-refractive index resin layers exhibit a lower refractive index than the high-refractive index resin layers at any arbitrary wavelength longer than or equal to 550 nm and shorter than or equal to the arbitrary wavelength;

(2) the infrared-shielding sheet according to (1), wherein for the high-refractive index resin layers, a value obtained by subtracting the refractive index at an arbitrary wavelength in the range of 780 nm to 1,500 nm from the refractive index at a wavelength of 550 nm is 0.1 or less, and for the low-refractive index resin layers, a value obtained by subtracting the refractive index at an arbitrary wavelength in the range of 780 nm to 1,500 nm from the refractive index at a wavelength of 550 nm is 0.1 or greater;

(3) the infrared-shielding sheet according to (1) or (2), wherein the low-refractive index resin layers exhibit a lower refractive index than the high-refractive index resin layers at an arbitrary wavelength in the range of 780 nm to 2,500 nm, and a QWOT coefficient of the optical thickness of at least one layer of the high-refractive index resin layers and/or at least one layer of the low-refractive index resin layers at an arbitrary wavelength in the range of 780 nm to 2,500 nm is 1.5 or greater;

(4) the infrared-shielding sheet according to any one of (1) to (3), wherein a surface resistance of each of the high-refractive index resin layers and the low-refractive index resin layers is 1 kΩ/□ or greater, a total number of layers of the high-refractive index resin layers and the low-refractive index resin layers is 3 or greater, and an optical thickness at an arbitrary wavelength in the range of 780 nm to 1,500 nm of each of the high-refractive index resin layers and the low-refractive index resin layers is 195 nm to 375 nm;

(5) the infrared-shielding sheet according to any one of (1) to (4), wherein the surface resistance of each of the high-refractive index resin layers and the low-refractive index resin layers is 1 kΩ/□ or greater, and the total number of layers of the high-refractive index resin layers and the low-refractive index resin layers is 4 or greater;

(6) the infrared-shielding sheet according to any one of (1) to (5), wherein the infrared-shielding sheet has a visible light transmittance of 50% or greater and a haze of 8% or less;

(7) the infrared-shielding sheet according to any one of (1) to (6), wherein at least one layer of the high-refractive index resin layers include fine particles of at least one selected from a group consisting of titanium oxide, zirconium

oxide, hafnium oxide, tantalum oxide, tungsten oxide, niobium oxide, cerium oxide, lead oxide, zinc oxide, diamond, borides, and nitrides;

(8) the infrared-shielding sheet according to any one of (1) to (7), wherein at least one layer of the low-refractive index resin layers includes fine particles of at least one selected from a group consisting of tin oxide, indium oxide, zinc oxide, and tungsten oxide, the fine particles possibly being doped with a third component or possibly having an oxygen defect incorporated therein;

(9) the infrared-shielding sheet according to (8), wherein at least one layer of the low-refractive index resin layers includes fine particles of at least one selected from a group consisting of antimony-doped tin oxide, tin-doped indium oxide, gallium-doped zinc oxide, oxygen-deficient tungsten oxide, and cesium-doped tungsten oxide;

(10) the infrared-shielding sheet according to (8) or (9), wherein at least one layer of the low-refractive index resin layers further includes silica fine particles;

(11) the infrared-shielding sheet according to (10), wherein the silica fine particles are hollow silica fine particles;

(12) the infrared-shielding sheet according to any one of (8) to (10), wherein at least one layer of the low-refractive index resin layers includes non-hollow fine particles of at least one selected from a group consisting of tin oxide, indium oxide, zinc oxide, and tungsten oxide, the non-hollow fine particles being possibly doped with a third component or possibly having an oxygen defect incorporated therein, and at least one layer of the low-refractive index resin layers, the layer possibly being identical with or different from the aforementioned layer, includes hollow fine particles;

(13) the infrared-shielding sheet according to any one of (1) to (12), wherein a percentage content of the fine particles included in the high-refractive index resin layers is 95% by weight or less with respect to the entirety of the high-refractive index resin layers;

(14) the infrared-shielding sheet according to any one of (1) to (13), wherein a percentage content of the fine particles included in the low-refractive index resin layers is 95% by weight or less with respect to the entirety of the low-refractive index resin layers;

(15) the infrared-shielding sheet according to any one of (1) to (14), wherein the infrared-absorbent pigment is at least one selected from a compound represented by the following Formula (I) or Formula (II):

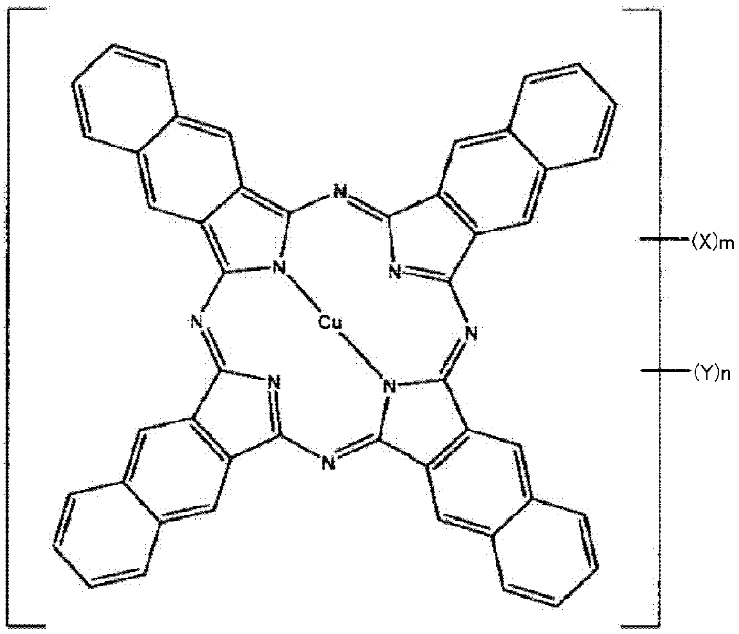

(I)

wherein in Formula (I), X and Y each independently represent a lower alkyl group, a lower alkoxy group, a substituted amino group, a nitro group, a halogen group, a hydroxy group, a carboxy group, a sulfonic acid group, or a sulfonamide group; m and n are both average values, and m and n each represent a value of 0 or more and 12 or less, while the sum of m and n has a value of 0 or more and 12 or less;

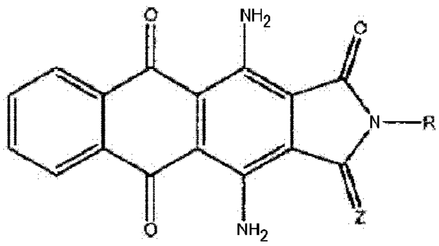

(II)

wherein in Formula (II), Z represents an oxygen atom or a sulfur atom; and R represents an atom or a functional group selected from a group consisting of a hydrogen atom, a substituted or unsubstituted aliphatic hydrocarbon group, an alicyclic hydrocarbon group, an aromatic hydrocarbon group, a hydrocarbon oxy group, and an ester group;
(16) the infrared-shielding sheet according to any one of (1) to (15), wherein the infrared-shielding sheet further includes a transparent support, and the laminated film and the infrared-absorbent pigment layer are formed on the transparent support;
(17) a method for producing the infrared-shielding sheet according to any one of (1) to (16), the method including a step of forming the high-refractive index resin layers, the low-refractive index resin layers, and the infrared-absorbent pigment layer by coating;
(18) an interlayer film for a laminated glass, the interlayer film including the infrared-shielding sheet according to any one of (1) to (16); and an interlayer film formed on at least one outermost layer of the infrared-shielding sheet;
(19) the interlayer film for a laminated glass according to (18), wherein the interlayer film contains polyvinyl butyral;
(20) a laminated glass, including the interlayer film for a laminated glass according to (18) or (19); and a plurality of glass plates, wherein the interlayer film for a laminated glass is inserted between a plurality of the glass plates;
(21) the laminated glass according to (20), wherein at least one of the glass plates is a green glass;
(22) the laminated glass according to (20) or (21), wherein the green glass has a visible light transmittance 70% or greater and 90% or less;
(23) the laminated glass according to any one of (20) to (22), wherein the laminated glass has a visible light transmittance of 70% or greater and a b* value in the L*a*b* color system of 10 or less; and
(24) a window member including the laminated glass according to any one of (20) to (23).

Advantageous Effects of Invention

The infrared-shielding sheet of the present invention has reflective characteristics in addition to satisfactory absorptive characteristics in a wide range of infrared radiation, also has excellent radio-wave transparency, transparency, and production cost, with low haze properties, and may effectively enhance the infrared shielding performance to a large extent. When the infrared-shielding sheet of the present invention is laid on window glasses of a house or an automobile, both the winter heating cost reducing effect and the summer temperature lowering effect for a house or an automobile may be enhanced.

Brief Description of Drawings

Fig. 1 is a graph showing the solar light energy arriving at the surface of the earth.
Fig. 2 is a cross-sectional view schematically illustrating an example of an interlayer film for a laminated glass according to embodiments of the present invention.
Fig. 3 is a cross-sectional view schematically illustrating an example of a laminated glass that uses the interlayer film for a laminated glass illustrated in Fig. 2.
Fig. 4 is a cross-sectional view schematically illustrating an infrared-shielding sheet according to an embodiment of the present invention.

Description of Embodiments

The infrared-shielding sheet of the present invention is an infrared-shielding sheet including a laminated film in which high-refractive index resin layers containing fine particles and low-refractive index resin layers containing fine particles are alternately laminated; and an infrared-absorbent pigment layer containing an infrared-absorbent pigment having a visible light transmittance of 70% or greater and a b* value of 10 or less in the L*a*b* color system, wherein concerning at least one layer of the low-refractive index resin layer, the value obtained by subtracting the refractive index

at an arbitrary wavelength in the range of 780 nm to 2,500 nm from the refractive index at a wavelength of 550 nm is 0.1 or greater, and the low-refractive index resin layers exhibit a lower refractive index than the high-refractive index resin layers at any arbitrary wavelength longer than or equal to 550 nm and shorter than or equal to the aforementioned arbitrary wavelength. According to the configuration described above, regarding at least one layer of the low-refractive index resin layers, since the value obtained by subtracting the refractive index at an arbitrary wavelength in the range of 780 nm to 2,500 nm from the refractive index at a wavelength of 550 nm is 0.1 or greater, the difference between the refractive index of at least one layer of the low-refractive index resin layers and the refractive index of high-refractive index resin layers adjacent to the at least one layer at an arbitrary wavelength in the range of 780 nm to 2,500 nm may be made large, while the difference between the refractive index of at least one layer of the low refractive index resin layers and the refractive index of high-refractive index resin layers adjacent to the at least one layer at a wavelength of 550 nm may be made small. As a result, an infrared-shielding sheet having both satisfactory visible light transmittance and satisfactory infrared shielding properties may be realized. Furthermore, according to the configuration described above, since the high-refractive index layers containing fine particles and the low-refractive index layers containing fine particles are all resin layers, the infrared-shielding sheet may be easily produced by coating or the like, and a reduction of the production cost may be attained. Furthermore, according to the configuration described above, since the high-refractive index layers containing fine particles, the low-refractive index layers containing fine particles, and the infrared-absorbent pigment layer are all resin layers, an infrared-shielding sheet having radio-wave transparency may be realized. In the present specification, the term "infrared region" means a region having a wavelength in the range of 780 nm to 2,500 nm.

The low-refractive index resin layers may be such that the value obtained by subtracting the refractive index at an arbitrary wavelength in the range of 780 nm to 1,500 nm from the refractive index at a wavelength of 550 nm is 0.1 or greater in all of the layers. In regard to the infrared-shielding sheet of the present invention, it is acceptable that for the high-refractive index resin layers, the value obtained by subtracting the refractive index at an arbitrary wavelength in the range of 780 nm to 1,500 nm from the refractive index at a wavelength of 550 nm is 0.1 or less; and for the low-refractive index resin layers, the value obtained by subtracting the refractive index at an arbitrary wavelength in the range of 780 nm to 1,500 nm from the refractive index at a wavelength of 550 nm is 0.1 or greater. Thereby, the differences between the refractive indices of the low-refractive index resin layers and the refractive indices of the high-refractive index resin layers at an arbitrary wavelength in the range of 780 nm to 1,500 nm may be made larger, while the differences between the refractive indices of the low-refractive index resin layers and the refractive indices of the high-refractive index resin layers at a wavelength of 550 nm may be made small. As a result, an infrared-shielding sheet having satisfactory infrared shielding properties while maintaining a satisfactory visible light transmittance may be realized.

It is preferable that the infrared-shielding sheet further includes a transparent support and has the laminated film formed on the transparent support.

The infrared-shielding sheet according to an embodiment of the present invention includes, as illustrated in Fig. 4, a laminated film 23 in which high-refractive index resin layers 21 containing fine particles and low-refractive index resin layers 22 containing fine particles are alternately laminated, on a transparent support 20, and includes an infrared-absorbent pigment layer 24 on the transparent support 20 on the side opposite to the laminated film. In the example illustrated in Fig. 4, the total number of layers of the high-refractive index resin layers 21 and the low-refractive index resin layers 22 is an even number (8 layers), and the edge layer on the transparent support 20 side in the laminated film 23 is a low-refractive index resin layer 22. However, it is also acceptable that the total number of layers of the high-refractive index resin layers 21 and the low-refractive index resin layers 22 is set to an odd number (for example, 7 layers), and a high-refractive index resin layer 21 comes as the edge layer on the transparent support 20 side in the laminated film 23. Furthermore, there are no particular limitations on the sequence of installation of the laminated film and the infrared-absorbent pigment layer on the transparent support, and for example, the laminated film may be installed on the transparent support, with the infrared-absorbent pigment layer being installed thereon. Depending on the purpose, the infrared-shielding sheet may be used after the transparent support is detached.

In the case of using the infrared-shielding sheet as a window member, disposing the laminated film and the infrared-absorbent pigment layer in this order with respect to the incident light (for example, solar light) is suitable for further enhancing durability; however, the order is not limited to this.

Regarding the transparent support, various resin films, glass, and the like may be used. Regarding the resin film, a polyolefin film such as a polyethylene film or a polypropylene film; a polyester film such as a polyethylene terephthalate (hereinafter, abbreviated to "PET") film, a polybutylene terephthalate film, or a polyethylene naphthalate (hereinafter, abbreviated to "PEN") film; a polycarbonate film, a polyvinyl chloride film; a cellulose triacetate film; a polyamide film; a polyimide film; and the like may be used.

In the present invention, with regard to the laminated film formed by alternately laminating a high-refractive index resin layer and a low-refractive index resin layer in the infrared-shielding sheet, the difference between the refractive indices of the two in the infrared region and the absolute value of the refractive index of the high-refractive index resin layer become important for determining the infrared reflection function. That is, when both the difference in the refractive

index and the absolute value of the refractive index are large, the infrared reflection function is enhanced.

According to the present invention, it is preferable that the difference between the refractive indices of at least two adjacent layers (a high-refractive index resin layer and a low-refractive index resin layer) is 0.1 or greater, more preferably 0.2 or greater, even more preferably 0.3 or greater, and particularly preferably 0.35 or greater, at an infrared wavelength reflected by the laminated film (wavelength arbitrarily set from the infrared range of 780 nm to 2,500 nm).

In a case in which the difference between the refractive indices of two adjacent layers is less than 0.1 at an infrared wavelength reflected by the laminated film, the number of laminations is increased in order to adjust the infrared reflectance to a desired value, the visible light transmittance is decreased, and the production cost increases. Therefore, it is not preferable.

Here, as shown in Fig. 1, the infrared region of the solar light arriving at the surface of the earth has several large peaks of energy, and in a case in which it is intended to shield the infrared region of the solar light, it becomes important to efficiently shield these large peaks of energy. Thus, the inventors of the present invention conducted a thorough investigation, and as a result, the present inventors found that when the QWOT coefficient of the optical film thickness of at least one layer of the high-refractive index resin layers and the low-refractive index resin layers at an arbitrary wavelength in the range of 780 nm to 2,500 nm is adjusted to be 1.5 or greater, the infrared region of the solar light may be efficiently blocked. Here, the QWOT (quarter wave optical thickness) coefficient of the optical thickness is defined as 1 when $nd = \lambda/4$.

Here, n represents the refractive index of the high-refractive index resin layer or the low-refractive index resin layer; d represents the geometrical thickness of the high-refractive index resin layer or the low-refractive index resin layer; and $\lambda$ represents the infrared wavelength reflected by the laminated film (wavelength arbitrarily set from the infrared region in the range of 780 nm to 2,500 nm).

In the infrared-shielding sheet of the present invention, it is preferable that the low-refractive index resin layers show a lower refractive index than the high-refractive index resin layers at an arbitrary wavelength in the range of 780 nm to 2,500 nm. Furthermore, regarding the infrared-shielding sheet of the present invention, an infrared-shielding sheet having a configuration in which the low-refractive index resin layers exhibit a lower refractive index than the high-refractive index resin layers at an arbitrary wavelength in the range of 780 nm to 2,500 nm, and the QWOT coefficient of the optical thickness of at least one layer of the high-refractive index resin layers and/or at least one layer of the low-refractive index resin layers at an arbitrary wavelength in the range of 780 nm to 2,500 nm is 1.5 or greater, is preferred. Thereby, large peaks of energy in the infrared region of the solar light may be effectively reflected, and thus infrared radiation may be shielded more efficiently.

In regard to the infrared-shielding sheet having the above-described configuration, it is preferable that the QWOT coefficient of the optical thickness at the aforementioned arbitrary wavelength of at least one layer of the high-refractive index resin layers or low-refractive index resin layers adjacent to the layer in which the QWOT coefficient of the optical thickness at the aforementioned wavelength is 1.5 or greater, is 1 or greater. Thereby, infrared radiation in the infrared region on the shorter wavelength side than the aforementioned arbitrary wavelength (for example, 780 nm or longer and shorter than 1,000 nm) may be shielded more efficiently. Furthermore, it is preferable that the infrared-shielding sheet having the above-described configuration includes at least one layer of the high-refractive index resin layers, in which the QWOT coefficient of the optical thickness at the aforementioned arbitrary wavelength is 1, and includes at least one layer of the low-refractive index resin layers, in which the QWOT coefficient of the optical thickness at the aforementioned arbitrary wavelength is 1. Thereby, infrared radiation at a wavelength near the aforementioned arbitrary wavelength may be efficiently shielded. Furthermore, in regard to the infrared-shielding sheet having the configuration described above, the arbitrary wavelength is preferably an arbitrary wavelength in the range of 780 nm to 1,500 nm. As the result, infrared radiation may be shielded more efficiently.

In regard to layers other than the layer having a QWOT coefficient of the optical thickness of 1.5 or greater among those high-refractive index resin layers and low-refractive index resin layers, the infrared wavelength $\lambda$ reflected by the laminated film is generally given by the following Formula (1):

$$n_H d_H + n_L d_L = \lambda/2 \quad \dots \quad (1)$$

Here, $n_H$ and $d_H$ represent the refractive index and the geometrical thickness, respectively, of the high-refractive index resin layer; and $n_L$ and $d_L$ represent the refractive index and the geometrical thickness, respectively, of the low-refractive index resin layer.

Meanwhile, the optical thickness of the high-refractive index resin layer (product of the refractive index $n_H$ and the geometrical thickness $d_H$) and the optical thickness of the low-refractive index resin layer (product of the refractive index $n_L$ and the geometrical thickness $d_L$) may be made identical to each other such that the respective values become an integer multiple of $\lambda/4$. That is, the optical thickness at an arbitrary wavelength in the range of 780 nm to 1,500 nm

(for example, the optical thickness at a wavelength of 1,200 nm) of each of the high-refractive index resin layers and the low-refractive index resin layers may be 195 nm to 375 nm. Thereby, an infrared-shielding sheet having both a satisfactory visible light transmittance and satisfactory infrared shielding properties may be realized.

Furthermore, the infrared radiation wavelength λ reflected by the laminated film is desirably 780 nm to 2,500 nm; however, it is more preferable that the wavelength λ is 780 nm to 1,500 nm. In a case in which the infrared radiation wavelength λ reflected by the laminated film is shorter than 780 nm, the infrared radiation wavelength λ reflected by the laminated film becomes a wavelength in the visible light region, and therefore, the visible light transmittance of the infrared-shielding sheet is decreased, which is not preferable. Furthermore, when the infrared radiation wavelength λ reflected by the laminated film is longer than 2,500 nm, the energy of infrared radiation included in the solar light is reduced, and the infrared shielding effect is mitigated. Therefore, it is not preferable. Furthermore, when the infrared wavelength λ reflected by the laminated film is longer than 1,500 nm, absorption by the fine particles included in the low-refractive index resin layers occurs, and therefore, the infrared shielding effect is mitigated. Therefore, it is more preferable that the infrared radiation wavelength λ is 1,500 nm or shorter.

The total number of layers of the high-refractive index resin layers and the low-refractive index resin layers (number of layers of the multilayer film) in the infrared-shielding sheet of the present invention is preferably 3 or greater, and more preferably 4 or greater. When the total number of layers of the high-refractive index resin layers and the low-refractive index resin layers is less than 3, the infrared reflection function is insufficient. Furthermore, when the total number of layers of the high-refractive index resin layers and the low-refractive index resin layers is 3 or greater, the total number of layers of the high-refractive index resin layers and the low-refractive index resin layers is more preferably 3 to 30, even more preferably 3 to 20, and particularly preferably 3 to 15. Furthermore, in a case in which the total number of layers of the high-refractive index resin layers and the low-refractive index resin layers is 4 or greater, the total number of layers of the high-refractive index resin layers and the low-refractive index resin layers is more preferably 4 to 30, even more preferably 4 to 20, and particularly preferably 4 to 15. When the total number of layers of the high-refractive index resin layers and the low-refractive index resin layers is greater than 30, there may be problems such as an increase in the production cost, a decrease in the visible light transmittance, a decrease in durability, and curling of the infrared-shielding sheet caused by increased stress exerted on the multilayer film including the high-refractive index resin layers and the low-refractive index resin layers, and it is not preferable.

Regarding the optical performance of the infrared-shielding sheet, a high visible light transmittance and a low total solar radiation transmittance are ideal; however, in general, the two are in a proportional relation, and the optical performance is determined depending on which performance of the two is more weighted. According to various investigations, in a case in which the infrared-shielding sheet of the present invention is laid on a window glass of a house or an automobile, in order to minimize increases in the illumination cost inside the house or the automobile and the winter heating cost, the visible light transmittance of the infrared-shielding sheet of the present invention is preferably 50% or greater, and more preferably 70% or greater. The total solar radiation transmittance of the infrared-shielding sheet is preferably 80% or lower, more preferably 70% or lower, and even more preferably 60% or lower, in order to shield infrared radiation more effectively. Furthermore, the haze of the infrared-shielding sheet needs to be a value that does not impair transparency, and the haze value is preferably 8% or lower, more preferably 3% or lower, and even more preferably 1% or lower.

In the case of producing a multilayer film in which high-refractive index layers and low-refractive index layers are alternately laminated by coating, the multilayer film utilizing the difference between the refractive indices of high-refractive index layers and low-refractive index layers, in the related art technologies, dielectric fine particles having a high refractive index (titanium oxide fine particles or the like) were incorporated into the high-refractive index resin layers, and dielectric fine particles having a low refractive index (silica fine particles or the like) were incorporated into the low-refractive index resin layers (for example, JP 2012-93481 A). The refractive indices of the dielectric fine particles are approximately constant over the range from the visible region to the infrared region, and the refractive index of the low-refractive index resin layers are also approximately constant over the range from the visible region to the infrared region.

However, the present inventors conducted a thorough investigation, and as a result, the present inventors discovered a low-refractive index resin layer containing fine particles, in which the value obtained by subtracting the refractive index at an arbitrary in the range of 780 nm to 2,500 nm (particularly, an arbitrary wavelength in the range of 780 nm to 1,500 nm) in the infrared region from the refractive index at a wavelength of 550 nm in the visible region is 0.1 or greater. The present inventors further found that since the low-refractive index resin layer containing fine particles also has an infrared absorption capacity, when the low-refractive index resin layer containing fine particles is combined with a high-refractive index resin layer containing fine particles (particularly, a high-refractive index resin layer in which the value obtained by subtracting the refractive index at an arbitrary wavelength in the range of 780 nm to 1,500 nm from the refractive index at a wavelength of 550 nm is 0.1 or less, for example, a high-refractive index resin layer containing dielectric fine particles of titanium oxide or the like that have been used in the related art technologies), light in the infrared region may be shielded more efficiently than the related art technologies.

The fine particles included in the high-refractive index resin layer, by which the above-described conditions are

satisfied, are suitably fine particles showing low absorption of light in the visible region and a high-refractive index in the infrared region. Examples of such fine particles include dielectric fine particles formed from dielectric substances such as titanium oxide, zirconium oxide, hafnium oxide, tantalum oxide, tungsten oxide, niobium oxide, cerium oxide, lead oxide, zinc oxide, and diamond. Among these, fine particles of at least one dielectric substance selected from titanium oxide, zirconium oxide, zinc oxide, and diamond are suitable. Furthermore, in addition to the dielectric fine particles formed from the dielectric substances listed above, fine particles of a boride and fine particles of a nitride may be mentioned as examples of electrically conductive metal oxide fine particles exhibiting a high refractive index in the infrared region and having an infrared absorption capacity. Regarding the fine particles of a boride and the fine particles of a nitride, specifically, fine particles of lanthanum hexaboride and fine particles of titanium nitride are suitable. It is preferable that at least one layer of the high-refractive index resin layers contains at least one kind of fine particles selected from a group consisting of titanium oxide, zirconium oxide, hafnium oxide, tantalum oxide, tungsten oxide, niobium oxide, cerium oxide, lead oxide, zinc oxide, diamond, a boride, and a nitride.

These fine particles exhibiting a high refractive index in the infrared region may be used alone, or two or more kinds thereof may be used in combination. Furthermore, it is also acceptable to use different fine particles in the respective high-refractive index resin layers in the laminated film.

Furthermore, the fine particles included in at least one layer of the low-refractive index resin layers are suitably fine particles that exhibit less light absorption in the visible region, exhibit satisfactory light absorption in the infrared region, and have a refractive index that is relatively lower than the refractive index of the fine particles included in the high-refractive index resin layer. Examples of such fine particles include electrically conductive metal oxide fine particles having a plasma wavelength in the infrared region. Specific examples of such metal oxide fine particles include fine particles of metal oxides such as tin oxide, indium oxide, zinc oxide, tungsten oxide, chromium oxide, and molybdenum oxide. Among these, at least one kind of fine particles selected from a group consisting of at least one of tin oxide, indium oxide, zinc oxide, and tungsten oxide, all of which have low light absorption properties in the visible region, are preferred, and among them, fine particles of indium oxide are more preferred.

Furthermore, in order to enhance the electrical conductivity of these metal oxide fine particles, it is preferable that a third component (third element; dopant) is doped into these metal oxide fine particles. Examples of the dopant to be doped into fine particles of tin oxide include antimony (Sb), vanadium (V), niobium (Nb), and tantalum (Ta), and examples of the dopant to be doped into fine particles of indium oxide include zinc (Zn), aluminum (Al), tin (Sn), antimony, gallium (Ga), and germanium (Ge). Examples of the dopant to be doped into fine particles of zinc oxide include aluminum, gallium, indium (In), tin, antimony, and niobium, and examples of the dopant to be doped into fine particles of tungsten oxide include cesium (Cs), rubidium (Rb), potassium (K), thallium (Tl), indium, barium (Ba), lithium (Li), calcium (Ca), strontium (Sr), iron (Fe), tin, aluminum, and copper (Cu). Furthermore, in order to increase the electrical conductivity of these metal oxide fine particles, it is also preferable that an oxygen defect is adopted as the third component. That is, oxygen defects may be incorporated into these metal oxide fine particles. Examples of metal oxide fine particles obtained by incorporating oxygen defects into fine particles of tungsten oxide include particles of oxygen-defected tungsten oxide (oxygen-deficient tungsten oxide) represented by a composition formula such as $WO_x$ (provided that $2.45 \leq x \leq 2.999$). Among metal oxide fine particles having a third component doped thereinto or having oxygen defects incorporated thereinto, at least one kind of fine particles selected from a group consisting of antimony-doped tin oxide (ATO), tin-doped indium oxide (hereinafter, appropriately abbreviated into "ITO"), gallium-doped zinc oxide (GZO), oxygen-defected tungsten oxide, and cesium-doped tungsten oxide are preferred, and tin-doped indium oxide is more preferred.

Furthermore, it is preferable for the metal oxide fine particles that the powder resistance obtainable when the fine particles are compressed at 60 MPa is 100 Ω·cm or less, more preferably 10 Ω·cm or less, and even more preferably 1 Ω·cm or less. In a case in which fine particles having a powder resistance of higher than 100 Ω·cm when compressed at 60 MPa are used, the absorption originating from plasma resonance of the fine particles becomes larger than 2,500 nm, and the infrared shielding effect is reduced. Regarding the method for measuring powder resistance, a method of using a powder resistance measurement system, MCP-PD51 type (manufactured by Mitsubishi Chemical Analytech Co., Ltd.), is preferred; however, the measurement method is not limited to this.

Furthermore, in a case in which at least one layer of the low-refractive index resin layers includes non-hollow fine particles (solid fine particles), particularly at least one kind of non-hollow fine particles selected from a group consisting of tin oxide, indium oxide, zinc oxide, and tungsten oxide, it is preferable that at least one layer of the low-refractive index resin layers (this may be identical with or different from the layer containing solid fine particles) includes hollow fine particles, and it is more preferable that the at least one layer includes hollow fine particles having a low refractive index (particularly, hollow fine particles having a lower refractive index than the non-hollow fine particles). Thereby, the infrared shielding effect of the infrared shielding sheet may be further enhanced.

Regarding the hollow fine particles, known hollow fine particles such as hollow silica fine particles or hollow acrylic beads (hollow acrylic resin fine particles) may be used. Regarding the non-hollow fine particles, at least one kind of non-hollow fine particles selected from a group consisting of at least one of tin oxide, indium oxide, zinc oxide, and tungsten oxide are preferred, and at least one kind of non-hollow fine particles selected from a group consisting of

antimony-doped tin oxide, ITO, gallium-doped zinc oxide, oxygen-defected tungsten oxide, and cesium-doped tungsten oxide are more preferred.

The porosity of the hollow fine particles is preferably 10% by volume to 90% by volume. When the porosity of the hollow fine particles is less than 10% by volume, the effect that the porosity of the fine particles caused by the pores of the hollow fine particles is decreased is reduced. Thus, the effect obtainable by using the hollow fine particles in the low-refractive index resin layers is reduced. Furthermore, when the porosity of the hollow fine particles is higher than 90% by volume, the mechanical strength of the hollow fine particles is decreased, and the hollow fine particles may not maintain a hollow state. Therefore, it is not preferable.

In the case of combining non-hollow fine particles such as metal oxide non-hollow fine particles with hollow fine particles as the fine particles included in the low-refractive index resin layers, the proportion of the non-hollow fine particles in the fine particles included in the low-refractive index resin layers is preferably 10% by weight to 90% by weight, and more preferably 20% by weight to 90% by weight. When the proportion of the non-hollow fine particles is less than 10% by weight, the infrared absorption capacity by the non-hollow fine particles is unfavorably insufficient. Furthermore, when the proportion of the non-hollow fine particles is more than 90% by weight, the proportion of the hollow fine particles is reduced, and it is not preferable.

In a case in which at least one layer of the low-refractive index resin layers includes the electrically conductive metal oxide fine particles described above (hereinafter, referred to as "electrically conductive fine particles") (particularly at least one kind of fine particles selected from a group consisting of tin oxide, indium oxide, zinc oxide, and tungsten oxide), at least one layer of the low-refractive index resin layers (this may be identical with or different from the layer containing electrically conductive metal oxide fine particles) may include dielectric fine particles having a low refractive index. Regarding the dielectric fine particles, silica fine particles, magnesium fluoride fine particles, and the like may be used. Furthermore, hollow dielectric fine particles may also be used as the dielectric fine particles. Examples of the hollow dielectric fine particles include hollow dielectric fine particles such as hollow silica fine particles and hollow acrylic beads. In a case in which at least one layer of the low-refractive index resin layers includes electrically conductive metal oxide fine particles (particularly, at least one kind of fine particles selected from a group consisting of tin oxide, indium oxide, zinc oxide, and tungsten oxide), since the at least one layer of the low-refractive index resin layers (this may be identical with or different from the layer containing electrically conductive metal oxide fine particles) includes silica fine particles, particularly hollow silica fine particles, the refractive index of the low-refractive index resin layers is decreased, and infrared radiation may be shielded more effectively.

When electrically conductive fine particles and dielectric fine particles (particularly, hollow dielectric fine particles) are used in combination in the low-refractive index resin layers as a whole, the proportion of the electrically conductive fine particles in the fine particles included in the low-refractive index resin layers as a whole is preferably 10% by weight to 90% by weight, and more preferably 20% by weight to 90% by weight. When the proportion of the electrically conductive fine particles is less than 10% by weight, the infrared absorption capacity by the metal oxide is insufficient, and therefore, it is not preferable. When the proportion of the electrically conductive fine particles is more than 90% by weight, the proportion of the dielectric fine particles (particularly, hollow dielectric fine particles) decreases, and it is not preferable.

The fine particles used in the low-refractive index resin layers (electrically conductive fine particles, dielectric fine particles, hollow fine particles, and the like) may be used singly, or two or more kinds thereof may be used together. In the case of using two or more kinds of fine particles in the low-refractive index resin layers, different kinds of fine particles may be incorporated into different low-refractive index resin layers, or different kinds of fine particles may be incorporated into the same low-refractive index resin layers.

Furthermore, regarding the fine particles included in the high-refractive index resin layers and the low-refractive index resin layers of the infrared-shielding sheet of the present invention, the average primary particle size or the average dispersion particle size is preferably 300 nm or less, and more preferably 1 nm to 200 nm. When the average primary particle size or average dispersion particle size of the fine particles is larger than 300 nm, the haze of the infrared-shielding sheet increases, and visibility through the infrared-shielding sheet is deteriorated. According to the present specification, the "average primary particle size of fine particles" means the average particle size of fine particles before being dispersed, and the "average dispersion particle size of fine particles" means the average particle size of fine particles in the dispersion after a dispersing process. The average primary particle size is calculated from the specific surface area measured by the BET (Brunauer, Emmett, and Teller) method. The particle size distribution analyzer for measuring the average dispersion particle size is not particularly limited; however, the particle size distribution analyzer is preferably "Nanotrac UPA-EX150" (manufactured by Nikkiso Co., Ltd.).

In order to shield light in an infrared region that may not be shielded by the laminated film including the high-refractive index resin layers and the low-refractive index resin layers, an infrared-shielding sheet having further enhanced infrared shielding properties may be produced by combining an infrared-absorbent pigment layer. The infrared-absorbent pigment layer is preferably a layer that selectively absorbs light having a wavelength of 780 nm to 2,000 nm. Furthermore, in order to secure transparency, the visible light transmittable of the infrared-absorbent pigment layer is preferably 70% or greater, and more preferably 75% or greater. Furthermore, in order to acquire a preferred hue for the external appearance, the value of b* in the L*a*b* color system of the infrared-absorbent pigment layer is preferably 10 or less, and more preferably 8 or less. When the b* value is larger than 10, a hue that feels unpleasant is obtained, which is not preferable. Meanwhile, the L*a*b* color system is the color system employed in JIS Z8781.

The infrared-absorbent pigment is not particularly limited as long as it satisfies the requirements for the visible light transmittance and the b* value; however, examples include compounds represented by Formula (I) and Formula (II) described above. It is also acceptable that infrared-absorbent pigments are mixed so as to satisfy the requirements for the visible light transmittance and the b* value.

In Formula (I), X and Y each independently represent a lower alkyl group, a lower alkoxy group, a substituted amino group, a nitro group, a halogen group, a hydroxy group, a carboxy group, a sulfonic acid group, or a sulfonamide group. m and n are both average values, and m and n each represent a value of 0 or more and 12 or less, while the sum of m and n has a value of 0 or more and 12 or less. The substituted amino group according to the present invention is not particularly limited; however, examples include a lower alkyl group or a substituted amino group. Furthermore, the lower alkyl group and the lower alkoxy group refer to a linear or branched alkyl group having 1 to 4 carbon atoms, and a linear or branched alkoxy group having 1 to 4 carbon atoms, respectively.

In Formula (II), Z represents an oxygen atom or a sulfur atom; and R represents an atom or a functional group selected from a group consisting of a hydrogen atom, a substituted or unsubstituted aliphatic hydrocarbon group, an alicyclic hydrocarbon group, an aromatic hydrocarbon group, a hydrocarbon oxy group, and an ester group. The position of substitution, the number of substitutions, and the type of the substituent for R are not particularly limited, and when there are two or more substituents, a mixture of two or more kinds of substituents may be used.

The aliphatic hydrocarbon group may be a saturated or unsaturated, linear or branched hydrocarbon group, and the number of carbon atoms of the hydrocarbon group is preferably 1 to 30, more preferably 1 to 20, and even more preferably 4 to 18. Here, examples of a saturated or unsaturated, linear or branched alkyl group include a methyl group, an ethyl group, a propyl group, an isopropyl group, a n-butyl group, an isobutyl group, an allyl group, a t-butyl group, a n-pentyl group, a n-hexyl group, a n-octyl group, a n-decyl group, a n-dodecyl group, a n-tridecyl group, a n-tetradecyl group, a n-cetyl group, a n-heptadecyl group, and a n-butenyl group. A saturated linear alkyl group is preferred. Particularly, a n-octyl group, a n-decyl group, a n-dodecyl group, and a n-cetyl group are preferred.

The alicyclic hydrocarbon group may be a saturated or unsaturated cyclic hydrocarbon group, and examples of a cyclic hydrocarbon group include a cyclic hydrocarbon group having 3 to 12 carbon atoms, such as a cyclohexyl group, a cyclopentyl group, an adamantyl group, or a norbornyl group.

Examples of the aromatic hydrocarbon group include a phenyl group, a naphthyl group, an anthryl group, a phenanthryl group, a pyrenyl group, and a benzopyrenyl group, and further examples include heterocyclic groups such as a pyridyl group, a pyrazyl group, a pyrimidyl group, a quinolyl group, an isoquinolyl group, a pyrrolyl group, an indolenyl group, an imidazolyl group, a carbazolyl group, a thienyl group, a furyl group, a pyranyl group, and a pyridonyl group; and fused heterocyclic groups such as a benzoquinolyl group, an anthraquinolyl group, a benzothienyl group, and a benzofuryl group. Among these, preferred are a phenyl group, a naphthyl group, a pyridyl group, and a thienyl group, and a phenyl group is particularly preferred.

Examples of the hydrocarbon oxy group include hydrocarbon oxy groups including the aforementioned aliphatic hydrocarbon groups. Examples of the ester group include ester groups including the aforementioned aliphatic hydrocarbon groups.

In order to satisfy the requirements for the infrared shielding performance, smoothness, low haze, and radio-wave transparency of the infrared-shielding sheet, it is important to appropriately disperse the fine particles included in the high-refractive index resin layers and the low-refractive index resin layers. For the same reasons, when a pigment is used in a dispersed form, it is important to appropriately disperse the pigment. Regarding a method for dispersing fine particles, methods of using a sand mill, an attritor, a ball mill, a homogenizer, a roll mill, a bead mill, and the like are preferred. Among these, a method of using a bead mill is particularly preferred. In the case of using a bead mill, the circumferential speed of the bead mill is preferably 3 m/s to 10 m/s. When the circumferential speed of the bead mill is lower than 3 m/s, the fine particles may not be sufficiently dispersed, and when the circumferential speed of the bead mill is higher than 10 m/s, the surface of the fine particles (particularly, electrically conductive fine particles) included in the low-refractive index resin layers may be impaired. Thus, the infrared absorption performance is deteriorated. The appropriate range of dispersion energy may slightly vary depending on the apparatus used for dispersion, the resin binder included in the high-refractive index resin layers, the low-refractive index resin layers, and the infrared-absorbent pigment layer, the fine particle concentration at the time of dispersing, and the like; however, it is desirable that the fine particles are dispersed with relatively low dispersion energy. Furthermore, in a case in which coarse particles remain after the treatment of dispersing the fine particles is performed, it is preferable to exclude coarse particles through treatments such as filtration and centrifugation.

The high-refractive index resin layers, the low-refractive index resin layers, and the infrared-absorbent pigment layer may be formed by a method of preparing a dispersion liquid by dissolving a resin binder in a solvent and also dispersing fine particles therein, applying the dispersion liquid on the surface of an object such as a transparent support,

and then evaporating the solvent. The solvent used for dispersing the fine particles in the dispersion liquid is not particularly limited; however, water, an organic solvent, or a mixture of water and an organic solvent may be used. Examples of the organic solvent include hydrocarbon-based solvents (toluene, xylene, n-hexane, cyclohexane, n-heptane, and the like), alcohol-based solvents (methanol, ethanol, isopropyl alcohol, butanol, t-butanol, benzyl alcohol, and the like), ketone-based solvents (acetone, methyl ethyl ketone, methyl isobutyl ketone, diisobutyl ketone, cyclohexanone, acetylacetone, and the like), ester-based solvents (ethyl acetate, methyl acetate, butyl acetate, cellosolve acetate, amyl acetate, and the like), ether-based solvents (isopropyl ether, 1,4-dioxane, and the like), glycol-based solvents (ethylene glycol, diethylene glycol, triethylene glycol, propylene glycol, and the like), glycol ether-based solvents (methyl cellosolve, butyl cellosolve, diethylene glycol monomethyl ether, propylene glycol monomethyl ether, and the like), glycol ester-based solvents (ethylene glycol monomethyl ether acetate, propylene glycol monomethyl ether acetate, diethylene glycol monoethyl ether acetate, and the like), glyme-based solvents (monoglyme, diglyme, and the like), halogen-based solvents (dichloromethane, chloroform, and the like), amide-based solvents (N,N-dimethylformamide, N,N-dimethylacetamide, N-methyl-2-pyrrolidone, and the like), pyridine, tetrahydrofuran, sulfolane, acetonitrile, dimethyl sulfoxide, and the like. The solvent used for dispersing is preferably at least one solvent selected from a group consisting of water, a ketone-based solvent, an alcohol-based solvent, an amide-based solvent, and a hydrocarbon-based solvent, and more preferably, the solvent is at least one solvent selected from a group consisting of toluene, methyl ethyl ketone, methyl isobutyl ketone, and acetylacetone.

When the fine particles or the infrared-absorbent pigment is dispersed in a solvent, a dispersant may be added to the solvent. Representative examples of the dispersant include low molecular weight negative-ionic (anionic) compounds such as a fatty acid salt (soap), an $\alpha$-sulfo fatty acid ester salt (MES), an alkylbenzene sulfonate (ABS), a linear alkylbenzene sulfonate (LAS), an alkyl sulfate (AS), an alkyl ether sulfuric acid ester salt (AES), and a triethanol alkyl sulfate; low molecular weight nonionic compounds such as a fatty acid ethanolamide, a polyoxyethylene alkyl ether (AE), a polyoxyethylene alkyl phenyl ether (APE), sorbitol, and sorbitan; low molecular weight positive-ionic (cationic) compounds such as an alkyltrimethylammonium salt, a dialkyldimethylammonium chloride, an alkylpyridinium chloride; low molecular weight amphoteric compound such as an alkylcarboxybetaine, sulfobetaine, and lecithin; polymeric water-based dispersants represented by a formalin condensate of a naphthalenesulfonate, a polystyrene sulfonate, a polyacrylate, a copolymer salt of a vinyl compound and a carboxylic acid-based monomer, carboxymethyl cellulose, polyvinyl alcohol, and the like; polymeric non-water-based dispersants such as a polyacrylic acid partial alkyl ester and polyalkylene polyamine; and polymeric cationic dispersants such as polyethyleneimine and an aminoalkyl methacrylate copolymer. However, dispersants having structures other than structures in the form of those listed herein as examples will not be excluded as long as the dispersants are suitably applicable to the fine particles used in the present invention.

Regarding the dispersant to be added to the solvent, the following dispersants are known under their specific trade names. That is, examples of the above-described dispersants include FLOWLEN DOPA-15B, FLOWLEN DOPA-17 (all manufactured by Kyoeisha Chemical Co., Ltd.); SOLPLUS AX5, SOLPLUS TX5, SOLSPERSE 9000, SOLSPERSE 12000, SOLSPERSE 17000, SOLSPERSE 20000, SOLSPERSE 21000, SOLSPERSE 24000, SOLSPERSE 26000, SOLSPERSE 27000, SOLSPERSE 28000, SOLSPERSE 32000, SOLSPERSE 35100, SOLSPERSE 54000, SOL SIX 250 (all manufactured by Lubrizol Japan, Ltd.); EFKA 4008, EFKA 4009, EFKA 4010, EFKA 4015, EFKA 4046, EFKA 4047, EFKA 4060, EFKA 4080, EFKA 7462, EFKA 4020, EFKA 4050, EFKA 4055, EFKA 4400, EFKA 4401, EFKA 4402, EFKA 4403, EFKA 4300, EFKA 4320, EFKA 4330, EFKA 4340, EFKA 6220, EFKA 6225, EFKA 6700, EFKA 6780, EFKA 6782, EFKA 8503 (all manufactured by BASF Japan, Ltd.); AJISPER PA111, AJISPER PB711, AJISPER PB821, AJISPER PB822, AJISPER PN411, FAMEX L-12 (all manufactured by Ajinomoto Fine-Techno Co., Inc.); TEXAPHOR-UV21, TEXAPHOR-UV61 (all manufactured by BASF Japan, Ltd.); DISPERBYK-101, DISPERBYK-102, DISPERBYK-106, DISPERBYK-108, DISPERBYK-111, DISPERBYK-116, DISPERBYK-130, DISPERBYK-140, DISPERBYK-142, DISPERBYK-145, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, DISPERBYK-180, DISPERBYK-182, DISPERBYK-192, DISPERBYK-193, DISPERBYK-2000, DISPERBYK-2001, DISPERBYK-2020, DISPERBYK-2025, DISPERBYK-2050, DISPERBYK-2070, DISPERBYK-2155, DISPERBYK-2164, BYK-220 S, BYK-300, BYK-306, BYK-320, BYK-322, BYK-325, BYK-330, BYK-340, BYK-350, BYK-377, BYK-378, BYK-380 N, BYK-410, BYK-425, BYK-430 (all manufactured by BYK Chemie Japan K.K.); DISPARLON 1751N, DISPARLON 1831, DISPARLON 1850, DISPARLON 1860, DISPARLON 1934, DISPARLON DA-400N, DISPARLON DA-703-50, DISPARLON DA-725, DISPARLON DA-705, DISPARLON DA-7301, DISPARLON DN-900, DISPARLON NS-5210, DISPARLON NVI-8514L, HIPLADD ED-152, HIPLADD ED-216, HIPLADD ED-251, HIPLADD ED-360 (all manufactured by Kusumoto Chemicals, Ltd.); FTX-207S, FTX-212P, FTX-220P, FTX-220S, FTX-228P, FTX-710LL, FTX-750LL, FTERGENT 212P, FTERGENT 220P, FTERGENT 222F, FTERGENT 228P, FTERGENT 245F, FTERGENT 245P, FTERGENT 250, FTERGENT 251, FTERGENT 710FM, FTERGENT 730FM, FTERGENT 730LL, FTERGENT 730LS, FTERGENT 750DM, FTERGENT 750FM (all manufactured by Neos Co., Ltd.); AS-1100, AS-1800, AS-2000 (all manufactured by Toagosei Co., Ltd.); KAOSERA 2000, KAOSERA 2100, KDH-154, MX-2045L, HOMOGENOL L-18, HOMOGENOL L-95, LEODOL SP-010V, LEODOL SP-030V, LEODOL SP-L10, LEODOL SP-P10 (all manufactured by Kao Corp.);

EVAN U103, SHANOL DC902B, NOIGEN EA-167, PLYSURF A219B, PLYSURF AL (all manufactured by Daiichi Kogyo Seiyaku Co., Ltd.); MEGAFAC F-477, MEGAFAC 480SF, MEGAFAC F-482 (all manufactured by DIC Corp.); SILFACE SAG503A, DYNOL 604 (all manufactured by Nissin Chemical Industry Co., Ltd.); SN SPERSE 2180, SN SPERSE 2190, SN LEVELER S-906 (all manufactured by San Nopco Co., Ltd.); S-386, and S-420 (all manufactured by AGC Seimi Chemical Co., Ltd.).

The high-refractive index resin layers and the low-refractive index resin layers have fine particles dispersed in a resin binder. The resin binder is not particularly limited as long as the resin is a resin capable of dispersively maintaining the fine particles, and examples include a thermoplastic resin, a thermosetting resin, and a photocurable resin. The same applies to the resin binder of the infrared-absorbent pigment layer.

Example of the thermoplastic resin include a high-density polyethylene resin, a (non-linear) low-density polyethylene resin, a linear low-density polyethylene resin, an ultralow-density polyethylene resin, a polypropylene resin, a polybutadiene resin, a cyclic olefin resin, a polymethylpentene resin, a polystyrene resin, an ethylene-vinyl acetate copolymer, an ionomer resin, an ethylene-vinyl alcohol copolymer resin, an ethylene-ethyl acrylate copolymer, an acrylonitrile-styrene resin, an acrylonitrile-chlorinated polystyrene-styrene copolymer resin, an acrylonitrile-acrylic rubber-styrene copolymer resin, an acrylonitrile-butadienestyrene copolymer resin, an acrylonitrile-EPDM (ethylenepropylene-diene monomer)-styrene copolymer resin, a silicone rubber-acrylonitrile-styrene copolymer resin, a cellulose-acetate-butyrate resin, a cellulose acetate resin, an acrylic resin (methacrylic resin), an ethylene-methyl methacrylate copolymer, an ethylene-ethyl acrylate copolymer, a vinyl chloride resin, a chlorinated polyethylene resin, a polyethylene tetrafluoride resin (polytetrafluoroethylene resin), an ethylene tetrafluoride-propylene hexafluoride copolymer resin, an ethylene tetrafluoride-perfluoroalkyl vinyl ether copolymer resin, an ethylene tetrafluoride-ethylene copolymer resin, a poly(ethylene trifluoride chloride) resin, a polyvinylidene fluoride resin, nylon 4,6, nylon 6, nylon 6,6, nylon 6,10, nylon 6,12, nylon 12, nylon 6,T, nylon 9,T, an aromatic nylon resin, a polyacetal resin, an ultrahigh molecular weight polyethylene resin, a polybutylene terephthalate resin, a PET resin, a polyethylene naphthalate resin, an amorphous copolyester resin, a polycarbonate resin, a modified polyphenylene ether resin, a thermoplastic polyurethane elastomer, a polyphenylene sulfide resin, a polyether ether ketone resin, a liquid crystal polymer, a polyfluoroalkoxy resin, a polyetherimide resin, a polysulfone resin (polysulfone resin), a polyketone resin, a thermoplastic polyimide resin, a polyamideimide resin, a polyallylate resin, a polyether sulfone resin, a biodegradable resin, and a biomass resin. However, the thermoplastic resin is not limited to these. Furthermore, the above-described thermoplastic resin may also be a mixture of two or more kinds of these resins.

The thermosetting resin is not particularly limited as long as it is a compound having a functional group that may be cured by heating, and examples include curable compounds having a cyclic ether group such as an epoxy group or an oxetanyl group. The photocurable resin is not particularly limited as long as it is a compound having a functional group that may be cured by light irradiation, and examples include resins having an unsaturated double bond-containing group such as a vinyl group, a vinyl ether group, an allyl group, a maleimide group, or a (meth)acryl group.

The curable compound having a cyclic ether group as described above is not particularly limited, and examples include an epoxy resin other than an alicyclic epoxy resin, an alicyclic epoxy resin, an oxetane resin, and a furan resin. Among these, from the viewpoints of the reaction rate and general-purpose usability, an epoxy resin other than an alicyclic epoxy resin, an alicyclic epoxy resin, or an oxetane resin is suitable. The epoxy resin other than an alicyclic epoxy resin is not particularly limited, and example include novolac type epoxy resins such as a phenol novolac type epoxy resin, a cresol novolac type epoxy resin, a biphenyl novolac type epoxy resin, a trisphenol novolac type epoxy resin, and a dicyclopentadiene novolac type epoxy resin; and bisphenol type epoxy resins such as a bisphenol A type epoxy resin, a bisphenol F type epoxy resin, a 2,2'-diallyl bisphenol A type epoxy resin, a hydrogenated bisphenol type epoxy resin, and a polyoxypropylene bisphenol A type epoxy resin. Furthermore, other examples of the epoxy resin other than an alicyclic epoxy resin include a glycidylamine type epoxy resin.

Examples of commercially available products of the above-described epoxy resins include phenol novolac type epoxy resins such as EPICLON N-740, EPICLON N-770, EPICLON N-775 (all manufactured by DIC Corp.), EPICOAT 152, and EPICOAT 154 (all manufactured by Mitsubishi Chemical Corp.); cresol novolac type epoxy resins such as EPICLON N-660, EPICLON N-665, EPICLON N-670, EPICLON N-673, EPICLON N-680, EPICLON N-695, EPICLON N-665-EXP, and EPICLON N-672-EXP (all manufactured by DIC Corp.); biphenyl novolac type epoxy resins such as NC-3000P (manufactured by Nippon Kayaku Co., Ltd.); trisphenol novolac type epoxy resins such as EP1032S50 and EP1032H60 (all manufactured by Mitsubishi Chemical Corp.); dicyclopentadiene novolac type epoxy resins such as XD-1000-L (manufactured by Nippon Kayaku Co., Ltd.) and EPICLON HP-7200 (manufactured by DIC Corp.); bisphenol A type epoxy compounds such as EPICOAT 828, EPICOAT 834, EPICOAT 1001, EPICOAT 1004 (all manufactured by Japan Epoxy Resin Co., Ltd.), EPICLON 850, EPICLON 860, and EPICLON 4055 (all manufactured by DIC Corp.); bisphenol F type epoxy resins such as EPICOAT 807 (all manufactured by Mitsubishi Chemical Corp.) and EPICLON 830 (manufactured by DIC Corp.); 2,2'-diallyl bisphenol A type epoxy resins such as RE-810NM (manufactured by Nippon Kayaku Co., Ltd.); hydrogenated bisphenol type epoxy resins such as ST-5080 (manufactured by Nippon Steel & Sumikin Chemical Co., Ltd.); and polyoxypropylene bisphenol A type epoxy resins such as EP-4000 and EP-4005 (all

manufactured by ADEKA Corp.).

The above-described alicyclic epoxy resin is not particularly limited, and examples include CELLOXIDE 2021, CELLOXIDE 2080, and CELLOXIDE 3000 (all manufactured by Daicel-Allnex, Ltd.). Examples of commercially available products of the above-described oxetane resin include ETERNACOLL EHO, ETERNACOLL OXBP, ETERNACOLL OXTP, and ETERNACOLL OXMA (all manufactured by Ube Industries, Ltd.). These curable compounds having cyclic ether groups may be used singly or in combination of two or more kinds thereof.

The above-described photocurable resin having an unsaturated double bond-containing group is not particularly limited, and examples include resins having groups such as a vinyl group, a vinyl ether group, an allyl group, a maleimide group, and a (meth)acryl group. Among the resins having those groups, a resin having a (meth)acryl group is preferred from the viewpoints of reactivity and general-purpose usability. According to the present specification, a (meth)acryl group refers to an acryl group or a methacryl group.

Examples of the above-described resin having a (meth)acryl group include 2-hydroxyethyl (meth)acrylate, 2-hydroxypropyl (meth)acrylate, 1,4-butanediol mono(meth)acrylate, carbitol (meth)acrylate, acryloylmorpholine, a half ester as a reaction product of a hydroxy group-containing (meth)acrylate and an acid anhydride of a polycarboxylic acid compound, polyethylene glycol di(meth)acrylate, tripropylene glycol di(meth)acrylate, trimethylolpropane tri(meth)acrylate, trimethylolpropane polyethoxy tri(meth)acrylate, glycerin polypropoxy tri(meth)acrylate, di(meth)acrylate of an ε-caprolactone adduct of neopentyl glycol hydroxypivalate (for example, KAYARAD HX-220, KAYARAD HX-620, and the like manufactured by Nippon Kayaku Co., Ltd.), pentaerythritol tetra(meth)acrylate, poly(meth)acrylate of a reaction product of dipentaerythritol and ε-caprolactone, dipentaerythritol poly(meth)acrylate (for example, KAYARAD DPHA and the like manufactured by Nippon Kayaku Co., Ltd.), and epoxy (meth)acrylate as a reaction product of a monoglycidyl compound or a polyglycidyl compound and (meth)acrylic acid. According to the present specification, the term (meth)acrylate refers to acrylate or methacrylate, and the term (meth)acrylic acid refers to acrylic acid or methacrylic acid.

A glycidyl compound (monoglycidyl compound or polyglycidyl compound) used for the epoxy (meth)acrylate as a reaction product of a monoglycidyl compound or a polyglycidyl compound and (meth)acrylic acid is not particularly limited, and examples include bisphenol A, bisphenol F, bisphenol S, 4,4'-biphenol, tetramethyl bisphenol A, dimethyl bisphenol A, tetramethyl bisphenol F, dimethyl bisphenol F, tetramethyl bisphenol S, dimethyl bisphenol S, tetramethyl-4,4'-biphenol, dimethyl-4,4'-biphenol, 1-(4-hydroxyphenyl)-2-[4-(1,1-bis(4-hydroxyphenyl)ethyl)phenyl]propane, 2,2'-methylenebis(4-methyl-6-tert-butylphenol), 4,4'-butylidenebis(3-methyl-6-tert-butylphenol), trishydroxyphenylmethane, resorcinol, hydroquinone, pyrogallol, a phenolic compound having a diisopropylidene skeleton, a phenolic compound having a fluorene skeleton such as 1,1-di-4-hydroxyphenylfluorene, phenolated polybutadiene, and glycidyl etherification products of polyphenols such as brominated bisphenol A, brominated bisphenol F, brominated bisphenol S, brominated phenol novolac, brominated cresol novolac, chlorinated bisphenol S, and chlorinated bisphenol A.

These epoxy (meth)acrylates, which are reaction products of a monoglycidyl compound or a polyglycidyl compound and (meth)acrylic acid, may be obtained by subjecting the epoxy groups (glycidyl groups) of a monoglycidyl compound or a polyglycidyl compound to an esterification reaction with an equivalent amount of (meth)acrylic acid. This synthesis reaction may be carried out by a generally known method. For example, to resorcin diglycidyl ether, an equivalent amount of (meth)acrylic acid is added together with a catalyst (for example, benzyldimethylamine, triethylamine, benzyltrimethylammonium chloride, triphenylphosphine, or triphenylstibine) and a polymerization inhibitor (for example, methoquinone, hydroquinone, methylhydroquinone, phenothiazine, or dibutylhydroxytoluene), and an esterification reaction is carried out at, for example, 80°C to 110°C. (Meth)acrylated resorcin diglycidyl ether obtained as such is a resin having a radically polymerizable (meth)acryloyl group. According to the present specification, the term (meth)acrylation refers to acrylation or methacrylation, and a (meth)acryloyl group refers to an acryloyl group or a methacryloyl group.

To the resin binder included in the infrared-shielding sheet of the present invention, in a case in which the resin binder is a photocurable resin, a photopolymerization initiator may be added as necessary, and in a case in which the resin binder is a thermosetting resin, a thermal curing agent may be added to the resin binder as necessary. The photopolymerization initiator is not particularly limited as long as it is an agent for subjecting an unsaturated double bond, an epoxy group or the like in a photocurable resin to a polymerization reaction by light irradiation, and examples include a cation polymerization type photopolymerization initiator and a radical polymerization type photopolymerization initiator. Examples of the photopolymerization initiator include 2-methyl-1-[4-(methylthio)phenyl]-2-morpholinopropan-1-one ("IRGACURE 907" manufactured by BASF Japan, Ltd.), 1-hydroxycyclohexyl phenyl ketone ("IRGACURE 184" manufactured by BASF Japan, Ltd.), 4-(2-hydroxyethoxy)-phenyl (2-hydroxy-2-propyl) ketone ("IRGACURE 2959" manufactured by BASF Japan, Ltd.), 1-(4-dodecylphenyl)-2-hydroxy-2-methylpropan-1-one ("DAROCUR 953" manufactured by Merck KGaA), 1-(4-isopropylphenyl)-2-hydroxy-2-methylpropan-1-one ("DAROCUR 1116" manufactured by Merck KGaA), 2-hydroxy-2-methyl-1-phenylpropan-1-one ("IRGACURE 1173" manufactured by BASF Japan, Ltd.); acetophenone compounds such as diethoxyacetophenone; benzoin compounds such as benzoin, benzoin methyl ether, benzoin ethyl ether, benzoin isopropyl ether, benzoin isobutyl ether, and 2,2-dimethoxy-2-phenylacetophenone ("IRGACURE 651" manufactured by BASF Japan, Ltd.); benzophenone compounds such as benzoyl benzoic acid, methyl benzoyl benzoate,

4-phenylbenzophenone, hydroxybenzophenone, 4-benzoyl-4'-methyldiphenyl sulfide, and 3,3'-dimethyl-4-methoxybenzophenone ("KAYACURE-MBP" manufactured by Nippon Kayaku Co., Ltd.); thioxanthone compounds such as thioxanthone, 2-chlorothioxanthone ("KAYACURE-CTX" manufactured by Nippon Kayaku Co., Ltd.), 2-methylthioxanthone, 2,4-dimethylthioxanthone ("KAYACURE-RTX" manufactured by Nippon Kayaku Co., Ltd.), isopropylthioxanthone, 2,4-dichlorothioxanthone ("KAYACURE-CTX" manufactured by Nippon Kayaku Co., Ltd.), 2,4-diethylthioxanthone ("KAYACURE-DETX" manufactured by Nippon Kayaku Co., Ltd.), and 2,4-diisopropylthioxanthone ("KAYACURE-DITX" manufactured by Nippon Kayaku Co., Ltd.); and 2,4,6-trimethylbenzoyl diphenylphosphine oxide ("LUCIRIN TPO" manufactured by BASF Japan, Ltd.). These photopolymerization initiators may be used singly, or two or more kinds thereof may be used in combination.

In the case of using the benzophenone compound or thioxanthone compound described above as the photopolymerization initiator, it is preferable to use a reaction aid in combination with the initiator in order to accelerate the photopolymerization reaction. The reaction aid is not particularly limited, and examples include amine compounds such as triethanolamine, methyldiethanolamine, triisopropanolamine, n-butylamine, N-methyldiethanolamine, diethylaminoethyl methacrylate, Michler's ketone, 4,4'-bis(diethylamino)benzophenone, ethyl 4-dimethylaminobenzoate, (2-n-butoxy)ethyl 4-dimethylaminobenzoate, and isoamyl 4-dimethylaminobenzoate. The thermal curing agent is not particularly limited as long as it is an agent for causing an unsaturated double bond, an epoxy group or the like in a thermosetting resin to react under heating and to form crosslinking, and examples include acid anhydrides, amines, phenols, imidazoles, dihydrazines, Lewis acids, Broensted acid salts, polymercaptones, isocyanates, and block isocyanates.

The percentage content of the fine particles included in the high-refractive index resin layers is preferably 40% by weight or more, more preferably 50% by weight or more, even more preferably 60% by weight or more, particularly preferably 70% by weight or more, and most preferably 90% by weight or more, with respect to the entirety of the high-refractive index resin layers. When the percentage content of the fine particles included in the high-refractive index resin layers is smaller than 40% by weight, the refractive index of the resin binder in the high-refractive index resin layers becomes predominant, and light in the infrared region may not be reflected effectively. Furthermore, it is preferable that the percentage content of the fine particles included in the high-refractive index resin layers is 95% by weight or less with respect to the entirety of the high-refractive index resin layers. When the percentage content of the fine particles included in the high-refractive index resin layers is larger than 95% by weight, the proportion of the resin binder in the high-refractive index resin layers becomes small, and therefore, it is difficult to produce a sheet form.

The percentage content of the fine particles included in the low-refractive index resin layers is preferably 40% by weight or more, more preferably 50% by weight or more, even more preferably 60% by weight or more, particularly preferably 70% by weight or more, and most preferably 90% by weight or more. When the percentage content of the fine particles included in the low-refractive index resin layers is smaller than 40% by weight, the refractive index of the resin binder in the low-refractive index resin layers becomes predominant, and the infrared reflection performance of the infrared-shielding sheet is deteriorated. Furthermore, it is preferable that the percentage content of the fine particles included in the low-refractive index resin layers is 95% by weight or less with respect to the entirety of the low-refractive index resin layers. When the percentage content of the fine particles included in the low-refractive index resin layers is larger than 95% by weight, the proportion of the resin binder in the low-refractive index resin layers becomes small, and therefore, it is difficult to produce a sheet form. Furthermore, when the percentage content of the fine particles included in the low-refractive index resin layers is larger than 95% by weight, in a case in which the fine particles included in the low-refractive index resin layers are electrically conductive fine particles, the fine particles are connected to one another, and therefore, the radio-wave transmission performance of the infrared-shielding sheet is deteriorated.

The surface resistances of the high-refractive index resin layers and the low-refractive index resin layers are preferably 1 kΩ/□ .($10^3$ Ω/□) or greater, more preferably 10 kΩ/□ ($10^4$ Ω/□) or greater, and even more preferably 1,000 kΩ/□ ($10^6$ Ω/□) or greater. When the surface resistances of the high-refractive index resin layers and the low-refractive index resin layers are lower than 1 kΩ/□, it is difficult for the infrared-shielding sheet to transmit radio-waves, and therefore, it is not preferable.

The maximum difference of elevation (surface roughness) of the respective surfaces of the high-refractive index resin layers and the low-refractive index resin layers is preferably 70 nm or less, more preferably 60 nm or less, and even more preferably 50 nm or less. When each of the high-refractive index resin layers and the low-refractive index resin layers is formed by dispersing fine particles in a dispersion liquid until aggregated fine particles disappear and then applying (coating) the dispersion liquid, the maximum difference of elevation of each of the high-refractive index resin layers and the low-refractive index resin layers may be adjusted to a preferable maximum difference of elevation. Furthermore, when the high-refractive index resin layers and the low-refractive index resin layers have a surface roughness (maximum difference of elevation of the surface) exceeding 70 nm, scattering of incident infrared light occurs at the surfaces of the high-refractive index resin layers and the low-refractive index resin layers, and satisfactory reflection performance may not be imparted to the infrared-shielding sheet.

It is preferable that the method for producing an infrared-shielding sheet of the present invention includes a step of forming the high-refractive index resin layers and the low-refractive index resin layers by coating. It is preferable

that the infrared-shielding sheet of the present invention is produced by a method including a step of applying coating liquids for forming high-refractive index resin layers and low-refractive index resin layers on a support such as a transparent support by a coating method appropriately selected from known coating methods, and drying the coating liquids. The method for coating the coating liquids is not particularly limited, and a method of using a coating apparatus such as a bar coater such as a wire bar coater, a spin coater, a die coater, a microgravure coater, a comma coater, a spray coater, a roll coater, or a knife coater may be mentioned. However, for the smoothness of the surfaces of the high-refractive index resin layers and the low-refractive index resin layers, preferably, a method of using a coating apparatus appropriate for thin film production, such as a bar coater, a spin coater, a die coater, or a microgravure coater, is preferred.

Depending on the purpose, an infrared-shielding sheet may be produced by laminating a functional layer such as a pressure-sensitive adhesive layer or a hard coat layer, on an infrared-shielding sheet. Furthermore, various additives such as, for example, an infrared-absorbent pigment, an ultraviolet absorbent, an oxidation inhibitor, and a photostabilizer may be incorporated, as necessary, into the high-refractive index resin layers, the low-refractive index resin layers, or the infrared-absorbent pigment layer, or into the above-mentioned functional layers laminated according to necessity.

[Interlayer film for laminated glass]

The interlayer film for a laminated glass of the present invention includes the infrared-shielding sheet of the present invention; and an interlayer film formed on at least one of the outermost layers of the infrared-shielding sheet. It is preferable that the interlayer film for a laminated glass of the present invention includes first and second interlayer films formed respectively on the outermost layer on both sides of the infrared-shielding sheet of the present invention, from the viewpoint of facilitation of laminated glass formation.

It is preferable that the interlayer film for a laminated glass of the present invention includes a second interlayer film in addition to the first interlayer film. In a conventional interlayer film for a laminated glass, the film thicknesses of the first and second interlayer films on both sides of the infrared-shielding sheet are the same; however, the present invention is not limited to an interlayer film for a laminated glass of such an embodiment, and an interlayer film for a laminated glass having different thicknesses of the first and second interlayer films may also be employed. The compositions of the first and second interlayer films may also be identical or different.

The thermal shrinkage before and after a step of compressing while heating the interlayer film for a laminated glass, the interlayer film including first and second interlayer films, is preferably 1% to 20%, more preferably 2% to 15%, and particularly preferably 2% to 10%, with respect to the range of the heating temperature at that time. The thicknesses of the first and second interlayer films are preferably 100 to 1,000 $\mu$m, more preferably 200 to 800 $\mu$m, and particularly preferably 300 to 500 $\mu$m. Furthermore, the first and second interlayer films may be made thicker by superposing a plurality of sheets.

Furthermore, regarding the reference for brittleness of the first and second interlayer films, the elongation at break obtainable by a tensile test is preferably 100% to 800%, more preferably 100% to 600%, and particularly preferably 200% to 500%.

It is preferable that the interlayer film contains polyvinyl butyral. It is preferable that the first and second interlayer films are resin interlayer films. It is preferable that the resin interlayer films are polyvinyl acetal-based resin films containing a polyvinyl acetal system as a main component. The polyvinyl acetal-based resin film is not particularly limited, and for example, those resin films described in JP 6-000926 A, JP 2007-008797 A, and the like may be preferably used. Among the above-described polyvinyl acetal-based resin films, in this invention, it is preferable to use a polyvinyl butyral resin film (polyvinyl butyral film). The polyvinyl butyral resin film is not particularly limited as long as it is a resin film containing polyvinyl butyral as a main component, and a polyvinyl butyral resin film that is used for widely known interlayer films for laminated glasses may be employed. Among them, according to the present invention, the interlayer film is preferably a resin interlayer film containing polyvinyl butyral as a main component, or a resin interlayer film containing ethylene vinyl acetate as a main component, and the interlayer film is particularly preferably a resin interlayer film containing polyvinyl butyral as a main component. Meanwhile, a resin as a main component means a resin that occupies a proportion of 50% by mass or more of the resin interlayer film.

The first and second interlayer films may include additives to the extent that the purport of the present invention is maintained. Examples of the additives include fine particles for heat ray shielding, fine particles for sound insulation, and a plasticizer. Examples of the fine particles for heat ray shielding and fine particles for sound insulation described above include inorganic fine particles and metal fine particles. When these fine particles are dispersed and mixed into an elastomer of the first or second interlayer film, which is a resin interlayer film, a heat shielding effect may be obtained. At the same time, it is preferable that propagation of sound waves is inhibited by such a configuration, and thereby a vibration damping effect is obtained. Furthermore, the shape of the fine particles is desirably a spherical shape; however, the shape may not be a true sphere. It is also acceptable to perform a treatment for changing the shape of the fine particles. It is desirable that the fine particles are dispersed in the interlayer film, and preferably within the interlayer film formed from polyvinyl butyral (hereinafter, abbreviated to "PVB"). The fine particles may be encapsulated in appropriate

capsules and incorporated into the interlayer film, or may be incorporated into the interlayer film together with a dispersant. The amount of addition of the fine particles in a case in which the first and second interlayer films include resin components is not particularly limited; however, the amount of addition is preferably 0.1 to 10 parts by weight with respect to 100 parts by weight of the resin components.

Examples of the inorganic fine particles include calcium carbonate fine particles, alumina fine particles, kaolin clay, calcium silicate fine particles, magnesium oxide fine particles, magnesium hydroxide fine particles, aluminum hydroxide fine particles, magnesium carbonate fine particles, talc powder, feldspar powder, mica powder, baryta powder, barium carbonate fine particles, titanium oxide fine particles, silica fine particles, and glass beads. These may be used singly or may be used as mixtures.

Examples of the heat ray-shielding fine particles include tin-doped indium oxide (ITO) fine particles, antimony-doped tin oxide (ATO) fine particles, aluminum-doped zinc oxide (AZO) fine particles, indium-doped zinc oxide (IZO) fine particles, tin-doped zinc oxide fine particles, silicon-doped zinc oxide fine particles, zinc antimonate fine particles, lanthanum hexaboride fine particles, cerium hexaboride fine particles, gold fine powder, silver fine powder, platinum fine powder, aluminum fine powder, iron fine powder, nickel fine powder, copper fine powder, stainless steel fine powder, tin fine powder, cobalt fine powder, and alloy powders containing these. Examples of the light-shielding agent include carbon black and red iron oxide. Examples of the pigment include a mixed pigment of dark reddish brown color obtained by mixing four kinds of pigments, namely, black pigment carbon black, a red pigment (C.I. Pigment Red), a blue pigment (C.I. Pigment Blue), and a yellow pigment (C.I. Pigment Yellow).

The plasticizer is not particularly limited, and any known plasticizer that is generally used as a plasticizer for an interlayer film of this type may be used. Regarding the plasticizer, for example, triethylene glycol di-2-ethylbutyrate (3GH), triethylene glycol di-2-ethylhexanoate (3GO), triethylene glycol di-n-heptanoate (3G7), tetraethylene glycol di-2-ethylhexanoate (4GO), tetraethylene glycol di-n-heptanoate (4G7), and oligoethylene glycol di-2-ethylhexanoate (NGO) are suitably used. In a case in which the interlayer film is a resin interlayer film, these plasticizers are generally used in an amount in the range of 25 to 70 parts by mass with respect to 100 parts by mass of the resin as a main component of the resin interlayer film (preferably, polyvinyl acetal resin).

It is preferable that the method for producing an interlayer film for a laminated glass of the present invention includes a step of laminating the infrared-shielding sheet of the present invention and an interlayer film in order and then thermally bonding the interlayer film with the infrared-shielding sheet. The method for thermal bonding is not particularly limited, and thermal compression of pressing a heated body on a laminate of infrared-shielding sheet/interlayer film (laminate obtained by superposing an interlayer film on an infrared-shielding sheet), thermal fusion bonding by heating by irradiation with a laser, and the like may be employed. Above all, in the method for producing an interlayer film for a laminated glass of the present invention, it is preferable that the step of thermally bonding an infrared-shielding sheet to an interlayer film is a step of thermally compressing an infrared-shielding sheet onto an interlayer film (thermal compression step).

The method for thermal compression is not particularly limited; however, a method of pressing a heated body at 80°C to 140°C on a laminate of infrared-shielding sheet/interlayer film is preferable. The heated body may be a planar heated body or a curved heated body, or may be a roller. For the thermal compression, a plurality of heating rollers, a heatable planar pinching surfaces, or the like may be used, and these may be used in combination. Furthermore, thermal compression may be carried out on both faces or on one face of the laminate of infrared-shielding sheet/interlayer film, and in that case, one side of the roller used for thermal compression may be a roller or a pinching surface, which is not heated. Among these, regarding the method for producing an interlayer film for a laminated glass of the present invention, it is preferable to use a heating roller in the thermal compression process, and it is more preferable to use a heating roller and a non-heating roller in combination.

Conventionally, the interlayer film is such that the surface is formed in a rough surface state by embossing processing or the like so that air may easily escape at the time of adhesion. The adhered surface becomes smooth in imitation of the surface to be adhered, and the optical performance is improved. However, the other surface needs to maintain the rough surface state so as to be adhered to a glass plate or the like. Therefore, it is preferable that in a thermal compression roller, the surface of the roller on the side that is brought into contact with the interlayer film is made into a rough surface state, and thereby the rough surface state of the interlayer film is maintained. That is, it is preferable that at least one surface of the interlayer film is embossing-processed, and the embossing-processed surface is laminated so as to be in contact with the infrared-shielding sheet of the present invention. Furthermore, after the thermal compression, the surface of the interlayer film, which is not in contact with the infrared-shielding sheet, may be positively embossing-processed.

The transparent support used at the time of producing the infrared-shielding sheet may be detached before or after the thermal adhesion process, or may be maintained as a portion of the interlayer film for a laminated glass, without being detached.

It is preferable that the method for producing an interlayer film for a laminated glass of the present invention includes a step of laminating a second interlayer film on the opposite surface of the infrared-shielding sheet, where a

first interlayer film is laminated. That is, it is preferable that the interlayer film for a laminated glass of the present invention has a second interlayer film in addition to a first interlayer film. An interlayer film for glass 1 according to an embodiment of the present invention includes, as illustrated in Fig. 2, the infrared-shielding sheet 2 according to the present invention; a first interlayer film 3 formed on one surface of the infrared-shielding sheet 2; and a second interlayer film 3' formed on the other surface of the infrared-shielding sheet 2. The infrared-shielding sheet 2 and the second interlayer film 3' may be adjacent to each other, or other constituent layers may be included therebetween. However, it is preferable that the infrared-shielding sheet 2 and the second interlayer film 3' are adjacent. It is preferable that these second interlayer film and other constituent layers are thermally compressed to the infrared-shielding sheet by a method similar to the process of thermal compression between the first interlayer film and the infrared-shielding sheet.

An interlayer film for a laminated glass including the infrared-shielding sheet and the interlayer films may be cut using a blade or may be cut by means of a laser, a water jet, or heat, upon processing.

[Laminated glass]

The laminated glass of the present invention has the interlayer film for a laminated glass of the present invention and a plurality of glass plates (two sheets of glass plates), and the interlayer film for a laminated glass is inserted between a plurality of the glass plates (at least two sheets of glass plates). The laminated glass of the present invention may be preferably cut out into any arbitrary size.

The usage application of the laminated glass of the present invention is not particularly limited; however, it is preferable that the laminated glass is used for a window glass for a house or an automobile. The window member of the present invention includes the laminated glass of the present invention.

The method for laminating the interlayer film for a laminated glass respectively with a first glass plate and a second glass plate is not particularly limited, and the interlayer film for a laminated glass may be laminated by inserting the interlayer film between two sheets of glass plates by any known method.

The laminated glass as a laminate of an interlayer film interposed between two sheets of glass plates has a configuration of glass plate/first interlayer film/infrared-shielding sheet/second interlayer film/glass plate being laminated in this order.

Fig. 3 is an outline diagram illustrating an example of the structure of a laminated glass according to the present invention, including an interlayer film for a laminated glass interposed between glass plates. A laminated glass 4 according to an embodiment of the present invention includes the interlayer film for a laminated glass shown in Fig. 2 (first interlayer film 3, infrared-shielding sheet 2, and second interlayer film 3') and a plurality of glass plates 5 and 5'. The interlayer film for a laminated glass is inserted between a plurality of the glass plates 5 and 5' such that the glass plate 5 is adjacent to the first interlayer film 3, and the glass plate 5' is adjacent to the second interlayer film 3'.

The edges of the infrared-shielding sheet 2 may be on the inner side than the edges of the glass plates 5 and 5' and the edges of the first interlayer film 3 and the second interlayer film 3'. Furthermore, the edges of the glass plates 5 and 5' and the edges of the first interlayer film 3 and the second interlayer film 3' may be at the same position, or any of them may protrude.

Furthermore, the laminated glass having the interlayer film for glass (a laminate of first interlayer film 3, infrared-shielding sheet 2, and second interlayer film 3') interposed between the glass plates 5 and 5' may be such that as illustrated in Fig. 3, the edges of the infrared-shielding sheet 2 may be at the same position with the edges of the glass plates 5 and 5' and the edges of the interlayer films 3 and 3'. On the other hand, the laminated glass may also be configured such that the edges of the infrared-shielding sheet 2 protrude past the edges of the glass plates 5 and 5' and the edges of the first interlayer film 3 and the second interlayer film 3'.

In regard to the interlayer film for glass (laminate of first interlayer film 3, infrared-shielding sheet 2, and second interlayer film 3') interposed between the glass plates 5 and 5', the infrared-shielding sheet 2 with the first interlayer film 3, and the infrared-shielding sheet 2 with the second interlayer film 3' may be respectively adjacent to each other, or other constituent layers may be disposed therebetween.

In the method for producing a laminated glass of the present invention, the glass plate may be a glass plate that does not have a curvature, or may be a curved glass. The two sheets of glass plates for interposing the interlayer film for a laminated glass may have a difference in the thickness, and the glass plates may be colored. Particularly, in the case of using the laminated glass for the windscreen of an automobile or the like for the purpose of heat shielding properties, a colored component such as metal may be incorporated into the glass plates to the extent that does not lower the visible light transmittance of the laminated glass below 70%, which is specified in JIS R 3211. Generally, the heat shielding properties may be effectively enhanced by using green glass for the glass plates. It is preferable that the color density of the green glass is regulated to a density suitable for the purpose, by adjusting the amount of the metal component to be added or by adjusting the thickness. The visible light transmittance of the green glass that is combined with the interlayer film for a laminated glass of the present invention is preferably 70% or greater, more preferably 75% or greater, and even more preferably 80% or greater. Furthermore, in order to obtain a color that is preferable in view

of the external appearance, the value of b* in the L*a*b* color system for the laminated glass is preferably 10 or less, and more preferably 8 or less. When the b* value is larger than 10, a color that feels unpleasant is obtained, which is not preferable. Furthermore, the visible light transmittance of the laminated glass of the present invention is preferably 70% or greater, more preferably 75% or greater, and even more preferably 80% or greater. Furthermore, in order to obtain a color that is preferable in view of the external appearance, the value of b* in the L*a*b* color system for the laminated glass is preferably 10 or less, and more preferably 8 or less. When the b* value is larger than 10, a color that feels unpleasant is obtained, which is not preferable.

The green glass may be disposed on both surfaces of the interlayer film for a laminated glass of the present invention, or may be disposed on one surface. In the case of disposing the green glass on one surface, it is preferable that the green glass is disposed on the indoor side relative to the laminated film with respect to incident light.

It is preferable that the method for producing a laminated glass of the present invention includes a step of compressing while heating the interlayer film for a laminated glass of the present invention, which is interposed between glass plates.

Lamination of the interlayer film for glass of the present invention interposed between glass plates with the glass plates may be carried out by, for example, preliminarily compressing the assembly at a temperature of 80°C to 120°C for a duration of 30 to 60 minutes under reduced pressure in a vacuum bag or the like, and then laminating the assembly at a temperature of 120°C to 150°C at an added pressure of 1.0 to 1.5 MPa in an autoclave. Thus, a laminated glass having an interlayer film for glass interposed between two sheets of glass plates may be obtained.

After completion of heating and compression, the method of cooling is not particularly limited, and the laminated glass may be obtained by leaving the laminated glass to cool while appropriately releasing the pressure. In regard to the method for producing a laminated glass of the present invention, it is preferable to perform cooling in a state in which pressure is maintained, after completion of heating and compression, from the viewpoint of further ameliorating the problem of wrinkles or cracks in the laminated glass thus obtainable.

It is preferable that the method for producing a laminated glass of the present invention includes a step of performing cooling in a state in which pressure is maintained, and then releasing the pressure. Specifically, it is preferable that cooling is performed in a state in which pressure is maintained, and then after the temperature inside the autoclave has reached 40°C or lower, cooling is continued while pressure is released.

## EXAMPLES

Hereinafter, the present invention will be described in more detail by way of Examples. In the Examples and Comparative Examples, the unit "parts" means parts by weight.

[Example 1]

(Production of high-refractive index resin layers)

1.4 parts of titanium oxide fine particles having an average primary particle size of 35 nm (trade name "TTO-51A", manufactured by Ishihara Sangyo Kaisha, Ltd.), 0.4 part of KAYARAD DPHA, 0.05 part of 2-methyl-1-[4-(methylthio)phenyl]-2-morpholinopropan-1-one ("IRGACURE 907" manufactured by BASF Japan, Ltd.), and 0.3 part of a dispersant (trade name "DISPERBYK-2001", manufactured by BYK Chemie Japan K.K.) were added to 7 parts of toluene, and the mixture as dispersed using a bead mill at a circumferential speed of 10 m/s. Thus, a high-refractive index resin coating liquid for forming a high-refractive index resin layer was produced. The average dispersion particle size of the titanium oxide fine particles was 45 nm.

Next, the high-refractive index resin coating liquid was applied on a PET substrate with a wire bar coater, and the coating liquid was dried for 2 minutes at 100°C. Thereby, toluene was evaporated, and then a high-refractive index resin layer was produced by UV irradiation. The percentage content of the fine particles included in the high-refractive index resin layer was 65% by weight with respect to the entirety of the high-refractive index resin layer. The refractive indices at a wavelength of 550 nm and a wavelength of 1,000 nm of the high-refractive index resin layer thus produced were measured with a spectroscopic ellipsometer (trade name "M-2000", manufactured by J.A. Woollam Japan Corp.), and the value, $\Delta n$, obtained by subtracting the refractive index at a wavelength of 1,000 nm from the refractive index at a wavelength of 550 nm was determined. Furthermore, the surface resistance of the high-refractive index resin layer thus produced was measured using a surface resistance meter (manufactured by Mitsubishi Chemical Analytech Co., Ltd., trade name "HIRESTA UP" and trade name "LORESTA GP").

(Production of low-refractive index resin layer A)

1.4 parts of tin-doped indium oxide fine particles, which were non-hollow fine particles, having an average

primary dispersion particle size of 25.6 nm and a powder resistance of 0.8 Ω·cm when the fine particles were compressed at 60 MPa (trade name "ITO-R", manufactured by CIK Nanotech Co., Ltd.), 0.4 part of KAYARAD DPHA, 0.05 part of 2,4,6-trimethylbenzoyl diphenylphosphine oxide (trade name "LUCIRIN TPO", photopolymerization initiator, manufactured by BASF Japan, Ltd.), and 0.3 part of an aminoalkyl methacrylate copolymer dispersant (trade name "DISPERBYK-167", manufactured by BYK Chemie Japan K.K.) were added to 7 parts of 1-methoxy-2-propanol (hereinafter, described as "PGM") as a solvent. The mixture was dispersed using a bead mill at a circumferential speed of 10 m/s, and thus a low-refractive index resin coating liquid A for forming a low-refractive index resin layer A was produced. The average dispersion particle size of the tin-doped indium oxide fine particles was 40 nm.

Next, the low-refractive index resin coating liquid A was applied on a PET substrate with a wire bar coater, and the coating liquid was dried for 2 minutes at 100°C. Thereby, PGM was evaporated, and then a low-refractive index resin layer A was produced by UV irradiation. The percentage content of the fine particles included in the low-refractive index resin layer A was 93% by weight with respect to the entirety of the low-refractive index resin layer A. The refractive indices at a wavelength of 550 nm and a wavelength of 1,000 nm of the low-refractive index resin layer A thus produced were measured with a spectroscopic ellipsometer (trade name "M-2000", manufactured by J.A. Woollam Japan Corp.), and the value, Δn, obtained by subtracting the refractive index at a wavelength of 1,000 nm from the refractive index at a wavelength of 550 nm was determined. Furthermore, the surface resistance of the low-refractive index resin layer A thus produced was measured in the same manner as in the measurement of the surface resistance of the high-refractive index resin layer.

(Production of low-refractive index resin coating liquid B)

In a solution obtained by dissolving 0.4 part of KAYARAD DPHA and 0.05 part of IRGACURE 184 in 4 parts of MEK, 3 parts of hollow silica fine particles (trade name "THRULYA 1110", average primary particle size 50 nm, solid content concentration 20% by weight, manufactured by JGC Catalysts & Chemicals, Ltd., dispersing medium: methyl isobutyl ketone) were dispersed, and thus a low-refractive index resin layer coating liquid B for forming a low-refractive index resin layer B was produced.

Next, the low-refractive index resin coating liquid B was applied on a PET substrate with a wire bar coater, and the coating liquid was dried for 2 minutes at 100°C. Thereby, PGM was evaporated, and then a low-refractive index resin layer B was produced by UV irradiation. The percentage content of the fine particles included in the low-refractive index resin layer B was 60% by weight with respect to the entirety of the low-refractive index resin layer B. The refractive indices at a wavelength of 550 nm and a wavelength of 1,000 nm of the low-refractive index resin layer B thus produced were measured with a spectroscopic ellipsometer (trade name "M-2000", manufactured by J.A. Woollam Japan Corp.), and the value, Δn, obtained by subtracting the refractive index at a wavelength of 1,000 nm from the refractive index at a wavelength of 550 nm was determined. Furthermore, the surface resistance of the low-refractive index resin layer B thus produced was measured in the same manner as in the measurement of the surface resistance of the high-refractive index resin layer.

(Production of laminated film)

The wavelength of light reflected by the laminated film was set to 1,000 nm, and on a PET substrate (trade name "COSMOSHINE A4100", manufactured by Toyobo Co., Ltd.; hereinafter, simply described as "PET substrate" as appropriate), the high-refractive index resin coating liquid, the low-refractive index resin coating liquid A, and the low-refractive index resin coating liquid B thus produced were appropriately diluted and applied such that the optical thickness at a wavelength of 1,000 nm and the QWOT coefficient at that wavelength for each of the layers would have values close to the values shown in Table 1. The respective layers were laminated in the order shown in Table 1 (the value of "Layer" in the table represents that the relevant layer is the n-th layer as counted from the side away from the PET substrate), and a laminated film in which the total number of layers of the high-refractive index resin layers and the low-refractive index resin layers was 8 was produced. Each layer was produced by applying a coating liquid for forming the resin layer described in the column for "Resin layer" in Table 1 using a wire bar coater, drying the coating liquid for 2 minutes at 100°C to evaporate the solvent, and then irradiating the coating with UV. The measurement results for the refractive index at a wavelength of 550 nm (described as "Refractive index n (550 nm)" in the table), the refractive index at a wavelength of 1,000 nm (described as "Refractive index n (1,000 nm)" in the table), the value, Δn, obtained by subtracting the refractive index at a wavelength of 1,000 nm from the refractive index at a wavelength of 550 nm, and the surface resistance for each of the layers are shown together in Table 1.

[Table 1]

| Layer | Resin layer | QWOT | Optical thickness | Refractive index n (550nm) / Refractive index n (1000nm) | Δn | Surface resistance |
|---|---|---|---|---|---|---|
| 1 | High-refractive index resin layer | 1.0 | 250nm | 1.88 / 1.83 | 0.05 | $1\times10^{13}\Omega/\square$ |
| 2 | Low-refractive index resin layer B | 1.0 | 250nm | 1.37 / 1.37 | 0.00 | $1\times10^{13}\Omega/\square$ |
| 3 | High-refractive index resin layer | 1.0 | 250nm | 1.88 / 1.83 | 0.05 | $1\times10^{13}\Omega/\square$ |
| 4 | Low-refractive index resin layer B | 1.0 | 250nm | 1.37 / 1.37 | 0.00 | $1\times10^{13}\Omega/\square$ |
| 5 | High-refractive index resin layer | 2.0 | 500nm | 1.88 / 1.83 | 0.05 | $1\times10^{13}\Omega/\square$ |
| 6 | Low-refractive index resin layer A | 1.0 | 250nm | 1.64 / 1.40 | 0.24 | $1\times10^{7}\Omega/\square$ |
| 7 | High-refractive index resin layer | 1.0 | 250nm | 1.88 / 1.83 | 0.05 | $1\times10^{13}\Omega/\square$ |
| 8 | Low-refractive index resin layer A | 2.5 | 625nm | 1.64 / 1.40 | 0.24 | $1\times10^{7}\Omega/\square$ |
| PET substrate | | | | | | |

(Production of infrared-absorbent pigment layer)

0.03 part of copper(II) 2,3-naphthalocyanine (manufactured by Sigma-Aldrich Japan K.K.), 0.2 part of KAYARAD DPHA, 0.01 part of 2,4,6-trimethylbenzoyl diphenylphosphine oxide (trade name "LUCIRIN TPO", photopolymerization initiator, manufactured by BASF Japan, Ltd.), and 0.06 part of an aminoalkyl methacrylate copolymer dispersant (trade name "DISPERBYK-167", manufactured by BYK Chemie Japan K.K.) were added to 3 parts of methyl ethyl ketone (hereinafter, described as "MEK") as a solvent, and the mixture was dispersed using a bead mill at a circumferential speed of 10 m/s. Thus, an infrared-absorbent pigment-containing coating liquid A for forming an infrared-absorbent pigment layer was produced.

Next, the infrared-absorbent pigment-containing coating liquid A was applied on the side opposite to the laminated film produced as described above (on the PET substrate on the opposite side where the laminated film was disposed) using a wire bar coater such that the geometrical thickness would be 4 μm. The coating liquid was dried for 2 minutes at 100°C to evaporate the solvent, and then an infrared-absorbent pigment layer was produced by UV irradiation. Thus, an infrared-shielding sheet related to one Example of the present invention was produced.

[Example 2]

(Production of interlayer film for laminated glass)

A PVB film as a first interlayer film was superposed on the laminated film side of the infrared-shielding sheet produced in Example 1, and thus a laminate was obtained. Using two heating rollers for lamination disposed on the front surface side and the back surface side of the laminate thus obtained, the laminate at a position of 1 mm or less from the edges of four directions (four sides) of the infrared-shielding sheet was compressed. Thus, the infrared-shielding sheet and the first interlayer film were bonded by thermal compression. At this time, the heating rollers for lamination were adjusted such that the temperature of the laminating roller on the interlayer film side was set to 25°C in order not to deform the embosses on the back surface of the first interlayer film by compression, and in contrast, the temperature

of the heating roller for lamination on the infrared-absorbent pigment layer side was set to 120°C in order to sufficiently deform the embosses on the infrared-shielding sheet side surface of the first interlayer film by compression and to thereby increase the adhesiveness between the first interlayer film and the infrared-shielding sheet. Subsequently, a PVB film as a second interlayer film was laminated on the back surface of the surface where the first interlayer film was bonded in the infrared-shielding sheet, and thus an interlayer film for a laminated glass including the infrared-shielding sheet of Example 1 was produced.

(Production into laminated glass)

The interlayer film for a laminated glass using the infrared-shielding sheet of Example 1 produced as described above was superposed in the order of glass plate (float plate glass FL3, manufactured by Central Glass Co., Ltd.)/first interlayer film/infrared-shielding sheet/second interlayer film/glass plate, and the interlayer film was combined with two sheets of glass plates. Thus, a laminate having an interlayer film for glass interposed between two sheets of glass plates (having an interlayer film for a laminated glass inserted between two sheets of glass plates) was produced. Here, the edges of the two sheets of glass plates and the edges of the first and second interlayer films were at the same position. As the glass plates, glass plates having a thickness of 3 mm were used. The laminate thus obtained, having an interlayer film for glass interposed between two sheets of glass plates, was subjected to preliminary compression for 30 minutes at 95°C in a vacuum. After the preliminary compression, the laminate interposed between the glass plates was compressed while heated in an autoclave under the conditions of 1.3 MPa and 120°C, and thus a laminated glass was produced.

[Example 3]

The interlayer film for a laminated glass used in Example 2 was used, and members were superposed in the order of glass plate (float plate glass FL3, manufactured by Central Glass Co., Ltd.)/first interlayer film/infrared-shielding sheet/second interlayer film/green glass plate (GREENRAL MFL3, manufactured by Central Glass Co., Ltd.). Thus, a laminated glass was produced in the same manner as in Example 2.

[Example 4]

An infrared-shielding sheet was produced in the same manner as in Example 1, except that the infrared-absorbent pigment used in Example 1 was changed to the compound described in JP 08-207459 A, 4,11-diamino-3-thioxo-2,3-dihydro-1H-naphtho[2,3-f]isoindole-1,5,10-trione. An interlayer film for a laminated glass and a laminated glass were produced in the same manner as in Example 2, using the infrared-shielding sheet thus produced.

[Comparative Example 1]

(Synthesis Example for infrared-absorbent pigment)

To 120 parts of sulfolane, 15.9 parts of naphthalic anhydride, 29 parts of urea, 0.40 parts of ammonium molybdate, and 3.5 parts of vanadyl (V) chloride were added, and this mixture was heated to 200°C. The mixture was allowed to react for 11 hours at the same temperature. After completion of the reaction, the mixture that had reacted was cooled to 65°C, and 100 parts of N,N-dimethylformamide (hereinafter, abbreviated to "DMF") was added thereto. A solid precipitated therefrom was separated by filtration. The solid thus obtained was washed with 50 parts of DMF, and 20.3 parts of a wet cake was obtained. The wet cake thus obtained was added to 100 parts of DMF, the mixture was heated to 80°C, and the mixture was stirred for 2 hours at the same temperature. A solid thus precipitated was separated by filtration and was washed with 200 parts of water, and 18.9 parts of a wet cake was obtained. The wet cake thus obtained was added to 150 parts of water, the mixture was heated to 90°C, and the mixture was stirred for 2 hours at the same temperature. A solid thus precipitated was separated by filtration and was washed with 200 parts of water, and 16.1 parts of a wet cake was obtained. The wet cake thus obtained was dried at 80°C, and 12.3 parts of an infrared-absorbent pigment was obtained.

0.02 part of the infrared-absorbent pigment synthesized as described above, 1 part of KAYARAD DPHA, 0.05 part of IRGACURE 184, and 0.01 part of an aminoalkyl methacrylate copolymer dispersant were added to 7 parts of toluene, and the mixture as dispersed using a bead mill at a circumferential speed of 10 m/s. Thus, an infrared-absorbent pigment-containing coating liquid B for forming an infrared-absorbent pigment layer was produced.

An infrared-shielding sheet was produced in the same manner as in Example 1, except that the infrared-absorbent pigment-containing coating liquid A used in Example 1 was changed to the infrared-absorbent pigment-containing liquid B produced as described above.

[Comparative Example 2]

An interlayer film for a laminated glass and a laminated glass were produced in the same manner as in Example 2, using the infrared-shielding sheet produced in Comparative Example 1.
The visible light transmittance, haze, total solar radiation transmittance (Tts), and b* value were measured for the infrared-shielding sheets and laminated glasses of Example 1 to Example 4 and Comparative Examples 1 and 2 using the following methods.

(Measurement of visible light transmittance of infrared-shielding sheet)

The visible light transmittance at a wavelength of 380 nm to 780 nm of an infrared-shielding sheet thus obtained was measured according to JIS R 3106 using a spectrophotometer (Shimadzu Corp., trade name "UV-3100").

(Measurement of total solar radiation transmittance (Tts) of infrared-shielding sheet)

The total solar radiation transmittance (Tts; Total Solar Transmittance) is the measure for what extent of thermal energy in the thermal energy (total solar radiation energy) from the sun is transmitted through the material that is an object of measurement. The total solar radiation transmittance (Tts) of an infrared-shielding sheet was calculated by the measurement method and calculation formula defined in ISO 13837. A smaller value of the total solar radiation transmittance of an infrared-shielding sheet thus calculated indicates smaller total solar radiation energy that is transmitted through the infrared-shielding sheet, and indicates that the infrared-shielding sheet has higher heat ray shielding properties.
Furthermore, when the transmittance and reflectance were measured with a spectrophotometer, the incident light was caused to enter through the laminated film side.

(Measurement of haze of infrared-shielding sheet)

The haze of an infrared-shielding sheet thus obtained was measured according to JIS K 6714 using a haze meter (manufactured by Tokyo Denshoku Co., Ltd., trade name "TC-HIIIDPK").

(Measurement of b* value)

The b* value at a wavelength of 380 nm to 780 nm measured from the visible light transmittance was calculated according to JIS Z8781 under the light source D65.
The measurement results for the visible light transmittance, haze, total solar radiation transmittance, and b* value for the infrared-shielding sheets and laminated glasses of Example 1 to Example 4 and Comparative Examples 1 and 2 are presented in Table 2.

[Table 2]

| | Visible light transmittance | Haze | Tts | b* value |
|---|---|---|---|---|
| Example 1 (infrared-shielding sheet) | 76.50% | 0.30% | 54.8% | 3.6 |
| Example 2 (laminated glass) | 76.80% | 0.40% | 56.2% | 3.6 |
| Example 3 (laminated glass) | 71.40% | 0.40% | 49.0% | 5.2 |
| Example 4 (laminated glass) | 70.50% | 0.40% | 54.5% | -2.0 |
| Comparative Example 5 (infrared-shielding sheet) | 70.50% | 0.30% | 48.0% | 25.3 |
| Comparative Example 6 (laminated glass) | 70.60% | 0.40% | 50.3% | 25.3 |

From Table 2, the infrared-shielding sheet according to Example 1 of the present invention includes a low-refractive index resin layer, for which the value obtained by subtracting the refractive index at an arbitrary wavelength in the range of 780 nm to 2,500 nm (specifically, wavelength of 1,000 nm) from the refractive index at a wavelength of 550 nm is 0.1 or greater (specifically, 0.24), and thereby the infrared-shielding sheet efficiently reflects infrared radiation in the wavelength range of 780 nm to 1,500 nm and absorbs infrared radiation in the wavelength range of 1,500 nm to 2,500 nm.
In addition to that, the infrared-shielding sheet was combined with an infrared-absorbent pigment having a b*

value of 10 or less, and thus, the total solar radiation transmittance (Tts) and hue were improved to a large extent while the transmittance was maintained, compared to Comparative Example 1.

The performance of the laminated glasses produced in Examples 2 and 4 was evaluated, and it was confirmed that the laminated glasses work as transparent heat-shielding glasses that exhibit satisfactory hues compared to Comparative Example 2 and have a haze of 0.5% or less.

Furthermore, in Example 3, by combining the heat ray-shielding sheet and a green glass plate, the total solar radiation transmittance (Tts) was improved to a large extent while the transmittance was maintained to be 70% or greater.

Industrial Applicability

According to the present invention, it was found that by imparting an infrared reflection capacity that utilizes the difference in the refractive index, in addition to the infrared absorption capacity of the fine particles and the infrared-absorbent pigment, temperature increase caused by infrared radiation is suppressed while the hue is ameliorated, compared to conventional infrared-shielding sheets. Accordingly, in a case in which the infrared-shielding sheet of the present invention is laid on a window glass for a house or an automobile, the temperature increase in the space of the house or automobile is suppressed, the work load of an air conditioner in the house or automobile is reduced, and thus, contributions may be made to energy saving or the global environmental problems. Furthermore, since the infrared-shielding sheet of the present invention may selectively shield light in the infrared region, the infrared-shielding sheet may be utilized in a window member for a construction, a window member for a vehicle, a window glass for a refrigerator and freezer showcase, an IR cutoff filter, forgery prevention, and the like.

Reference Signs List

1 INTERLAYER FILM FOR A LAMINATED GLASS
2 INFRARED-SHIELDING SHEET (MAY INCLUDE A TRANSPARENT SUPPORT)
3, 3' INTERLAYER FILM
4 LAMINATED GLASS
5, 5' GLASS PLATE, GREEN GLASS
20 TRANSPARENT SUPPORT
21 HIGH-REFRACTIVE INDEX RESIN LAYER
22 LOW-REFRACTIVE INDEX RESIN LAYER
23 LAMINATED FILM
24 INFRARED-ABSORBENT PIGMENT LAYER

The present invention can be carried out in various other forms, without departing from the spirit or main features of the invention. Therefore, the embodiments described above have been provided merely for illustrative purposes in all aspects and shall not be construed to limit the invention. It should be noted that the scope of the present invention be defined by the claims, and the invention is not intended to be restricted by any of the detailed descriptions of the specification. Furthermore, any alterations or modifications made within the scope of the claims and their equivalents shall be construed to be included within the scope of the present invention.

## Claims

**1.** An infrared-shielding sheet, comprising:

a laminated film having high-refractive index resin layers containing fine particles and low-refractive index resin layers containing fine particles alternately laminated therein; and
an infrared-absorbent pigment layer containing an infrared-absorbent pigment having a visible light transmittance of 70% or greater and a b* value in the L*a*b* color system of 10 or less,
wherein for at least one layer of the low-refractive index resin layers, a value obtained by subtracting the refractive index at an arbitrary wavelength in the range of 780 nm to 2,500 nm from the refractive index at a wavelength of 550 nm is 0.1 or greater, and the low-refractive index resin layers exhibit a lower refractive index than the high-refractive index resin layers at any arbitrary wavelength longer than or equal to 550 nm and shorter than or equal to the arbitrary wavelength.

**2.** The infrared-shielding sheet according to claim 1, wherein for the high-refractive index resin layers, a value obtained by subtracting the refractive index at an arbitrary wavelength in the range of 780 nm to 1,500 nm from the refractive index at a wavelength of 550 nm is 0.1 or less, and for the low-refractive index resin layers, a value obtained by subtracting the refractive index at an arbitrary wavelength in the range of 780 nm to 1,500 nm from the refractive index at a wavelength of 550 nm is 0.1 or greater.

**3.** The infrared-shielding sheet according to claim 1 or 2, wherein the low-refractive index resin layers exhibit a lower refractive index than the high-refractive index resin layers at an arbitrary wavelength in the range of 780 nm to 2,500 nm, and a QWOT coefficient of the optical thickness of at least one layer of the high-refractive index resin layers and/or at least one layer of the low-refractive index resin layers at an arbitrary wavelength in the range of 780 nm to 2,500 nm is 1.5 or greater.

**4.** The infrared-shielding sheet according to any one of claims 1 to 3, wherein a surface resistance of each of the high-refractive index resin layers and the low-refractive index resin layers is 1 kΩ/□ or greater, a total number of layers of the high-refractive index resin layers and the low-refractive index resin layers is 3 or greater, and an optical thickness at an arbitrary wavelength in the range of 780 nm to 1,500 nm of each of the high-refractive index resin layers and the low-refractive index resin layers is 195 nm to 375 nm.

**5.** The infrared-shielding sheet according to any one of claims 1 to 4, wherein the surface resistance of each of the high-refractive index resin layers and the low-refractive index resin layers is 1 kΩ/□ or greater, and the total number of layers of the high-refractive index resin layers and the low-refractive index resin layers is 4 or greater.

**6.** The infrared-shielding sheet according to any one of claims 1 to 5, wherein the infrared-shielding sheet has a visible light transmittance of 50% or greater and a haze of 8% or less.

**7.** The infrared-shielding sheet according to any one of claims 1 to 6, wherein at least one layer of the high-refractive index resin layers include fine particles of at least one selected from a group consisting of titanium oxide, zirconium oxide, hafnium oxide, tantalum oxide, tungsten oxide, niobium oxide, cerium oxide, lead oxide, zinc oxide, diamond, borides, and nitrides.

**8.** The infrared-shielding sheet according to any one of claims 1 to 7, wherein at least one layer of the low-refractive index resin layers includes fine particles of at least one selected from a group consisting of tin oxide, indium oxide, zinc oxide, and tungsten oxide, the fine particles possibly being doped with a third component or possibly having an oxygen defect incorporated therein.

**9.** The infrared-shielding sheet according to claim 8, wherein at least one layer of the low-refractive index resin layers includes fine particles of at least one selected from a group consisting of antimony-doped tin oxide, tin-doped indium oxide, gallium-doped zinc oxide, oxygen-deficient tungsten oxide, and cesium-doped tungsten oxide.

**10.** The infrared-shielding sheet according to claim 8 or 9, wherein at least one layer of the low-refractive index resin layers further includes silica fine particles.

**11.** The infrared-shielding sheet according to claim 10, wherein the silica fine particles are hollow silica fine particles.

**12.** The infrared-shielding sheet according to any one of claims 8 to 10, wherein at least one layer of the low-refractive index resin layers includes non-hollow fine particles of at least one selected from a group consisting of tin oxide, indium oxide, zinc oxide, and tungsten oxide, the non-hollow fine particles being possibly doped with a third component or possibly having an oxygen defect incorporated therein, and at least one layer of the low-refractive index resin layers, the layer possibly being identical with or different from the aforementioned layer, includes hollow fine particles.

**13.** The infrared-shielding sheet according to any one of claims 1 to 12, wherein a percentage content of the fine particles included in the high-refractive index resin layers is 95% by weight or less with respect to the entirety of the high-refractive index resin layers.

**14.** The infrared-shielding sheet according to any one of claims 1 to 13, wherein a percentage content of the fine particles included in the low-refractive index resin layers is 95% by weight or less with respect to the entirety of the low-refractive index resin layers.

**15.** The infrared-shielding sheet according to any one of claims 1 to 14, wherein the infrared-absorbent pigment is at least one selected from a compound represented by the following Formula (I) or Formula (II):

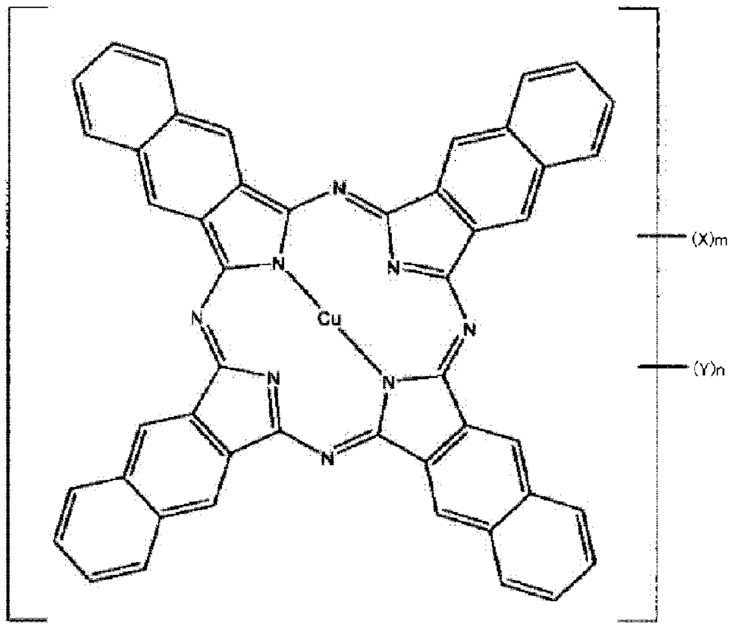

(I)

wherein in Formula (I), X and Y each independently represent a lower alkyl group, a lower alkoxy group, a substituted amino group, a nitro group, a halogen group, a hydroxy group, a carboxy group, a sulfonic acid group, or a sulfonamide group; m and n are both average values, and m and n each represent a value of 0 or more and 12 or less, while the sum of m and n has a value of 0 or more and 12 or less;

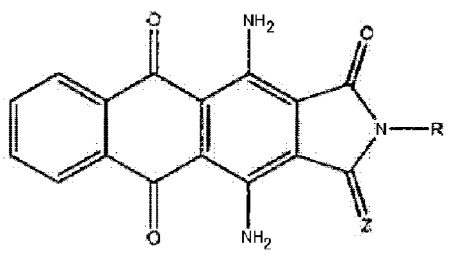

(II)

wherein in Formula (II), Z represents an oxygen atom or a sulfur atom; and R represents an atom or a functional group selected from a group consisting of a hydrogen atom, a substituted or unsubstituted aliphatic hydrocarbon group, an alicyclic hydrocarbon group, an aromatic hydrocarbon group, a hydrocarbon oxy group, and an ester group.

**16.** The infrared-shielding sheet according to any one of claims 1 to 15, wherein the infrared-shielding sheet further comprises a transparent support, and the laminated film and the infrared-absorbent pigment layer are formed on the transparent support.

**17.** A method for producing the infrared-shielding sheet according to any one of claims 1 to 16, the method comprising a step of forming the high-refractive index resin layers, the low-refractive index resin layers, and the infrared-absorbent pigment layer by coating.

**18.** An interlayer film for a laminated glass, the interlayer film comprising the infrared-shielding sheet according to any one of claims 1 to 16; and an interlayer film formed on at least one outermost layer of the infrared-shielding sheet.

**19.** The interlayer film for a laminated glass according to claim 18, wherein the interlayer film contains polyvinyl butyral.

**20.** A laminated glass, comprising the interlayer film for a laminated glass according to claim 18 or 19; and a plurality of glass plates,
wherein the interlayer film for a laminated glass is inserted between a plurality of the glass plates.

**21.** The laminated glass according to claim 20, wherein at least one of the glass plates is a green glass.

**22.** The laminated glass according to claim 20 or 21, wherein the green glass has a visible light transmittance 70% or greater and 90% or less.

**23.** The laminated glass according to any one of claims 20 to 22, wherein the laminated glass has a visible light transmittance of 70% or greater and a b* value in the L*a*b* color system of 10 or less.

**24.** A window member comprising the laminated glass according to any one of claims 20 to 23.

**Amended claims under Art. 19.1 PCT**

**1.** (Amended) An infrared-shielding sheet, comprising:

a laminated film having high-refractive index resin layers containing fine particles and low-refractive index resin layers containing fine particles alternately laminated therein; and
an infrared-absorbent pigment layer containing an infrared-absorbent pigment having a visible light transmittance of 70% or greater and a b* value in the L*a*b* color system of 10 or less,
wherein for at least one layer of the low-refractive index resin layers, a value obtained by subtracting the refractive index at an arbitrary wavelength in the range of 780 nm to 2,500 nm from the refractive index at a wavelength of 550 nm is 0.1 or greater, and the low-refractive index resin layers exhibit a lower refractive index than the high-refractive index resin layers at any arbitrary wavelength longer than or equal to 550 nm and shorter than or equal to the arbitrary wavelength,
wherein at least one layer of the low-refractive index resin layers includes fine particles of at least one selected from a group consisting of tin oxide, indium oxide, zinc oxide, and tungsten oxide, the fine particles possibly being doped with a third component or possibly having an oxygen defect incorporated therein.

**2.** The infrared-shielding sheet according to claim 1, wherein for the high-refractive index resin layers, a value obtained by subtracting the refractive index at an arbitrary wavelength in the range of 780 nm to 1,500 nm from the refractive index at a wavelength of 550 nm is 0.1 or less, and for the low-refractive index resin layers, a value obtained by subtracting the refractive index at an arbitrary wavelength in the range of 780 nm to 1,500 nm from the refractive index at a wavelength of 550 nm is 0.1 or greater.

**3.** The infrared-shielding sheet according to claim 1 or 2, wherein the low-refractive index resin layers exhibit a lower refractive index than the high-refractive index resin layers at an arbitrary wavelength in the range of 780 nm to 2,500 nm, and a QWOT coefficient of the optical thickness of at least one layer of the high-refractive index resin layers and/or at least one layer of the low-refractive index resin layers at an arbitrary wavelength in the range of 780 nm to 2,500 nm is 1.5 or greater.

**4.** The infrared-shielding sheet according to any one of claims 1 to 3, wherein a surface resistance of each of the high-refractive index resin layers and the low-refractive index resin layers is 1 kΩ/□ or greater, a total number of layers of the high-refractive index resin layers and the low-refractive index resin layers is 3 or greater, and an optical thickness at an arbitrary wavelength in the range of 780 nm to 1,500 nm of each of the high-refractive index resin layers and the low-refractive index resin layers is 195 nm to 375 nm.

**5.** The infrared-shielding sheet according to any one of claims 1 to 4, wherein the surface resistance of each of the high-refractive index resin layers and the low-refractive index resin layers is 1 kΩ/□ or greater, and the total number of layers of the high-refractive index resin layers and the low-refractive index resin layers is 4 or greater.

**6.** The infrared-shielding sheet according to any one of claims 1 to 5, wherein the infrared-shielding sheet has a visible light transmittance of 50% or greater and a haze of 8% or less.

**7.** The infrared-shielding sheet according to any one of claims 1 to 6, wherein at least one layer of the high-refractive index resin layers include fine particles of at least one selected from a group consisting of titanium oxide, zirconium oxide, hafnium oxide, tantalum oxide, tungsten oxide, niobium oxide, cerium oxide, lead oxide, zinc oxide, diamond, borides, and nitrides.

**8.** (Canceled)

**9.** (Amended) The infrared-shielding sheet according to any one of claims 1 to 7, wherein at least one layer of the low-refractive index resin layers includes fine particles of at least one selected from a group consisting of antimony-doped tin oxide, tin-doped indium oxide, gallium-doped zinc oxide, oxygen-deficient tungsten oxide, and cesium-doped tungsten oxide.

**10.** (Amended) The infrared-shielding sheet according to any one of claims 1 to 7 and 9, wherein at least one layer of the low-refractive index resin layers further includes silica fine particles.

**11.** The infrared-shielding sheet according to claim 10, wherein the silica fine particles are hollow silica fine particles.

**12.** (Amended) The infrared-shielding sheet according to any one of claims 1 to 7, 9 and 10, wherein at least one layer of the low-refractive index resin layers includes non-hollow fine particles of at least one selected from a group consisting of tin oxide, indium oxide, zinc oxide, and tungsten oxide, the non-hollow fine particles being possibly doped with a third component or possibly having an oxygen defect incorporated therein, and at least one layer of the low-refractive index resin layers, the layer possibly being identical with or different from the aforementioned layer, includes hollow fine particles.

**13.** (Amended) The infrared-shielding sheet according to any one of claims 1 to 7 and 9 to 12, wherein a percentage content of the fine particles included in the high-refractive index resin layers is 95% by weight or less with respect to the entirety of the high-refractive index resin layers.

**14.** (Amended) The infrared-shielding sheet according to any one of claims 1 to 7 and 9 to 13, wherein a percentage content of the fine particles included in the low-refractive index resin layers is 95% by weight or less with respect to the entirety of the low-refractive index resin layers.

**15.** (Amended) The infrared-shielding sheet according to any one of claims 1 to 7 and 9 to 14, wherein the infrared-absorbent pigment is at least one selected from a compound represented by the following Formula (I) or Formula (II):

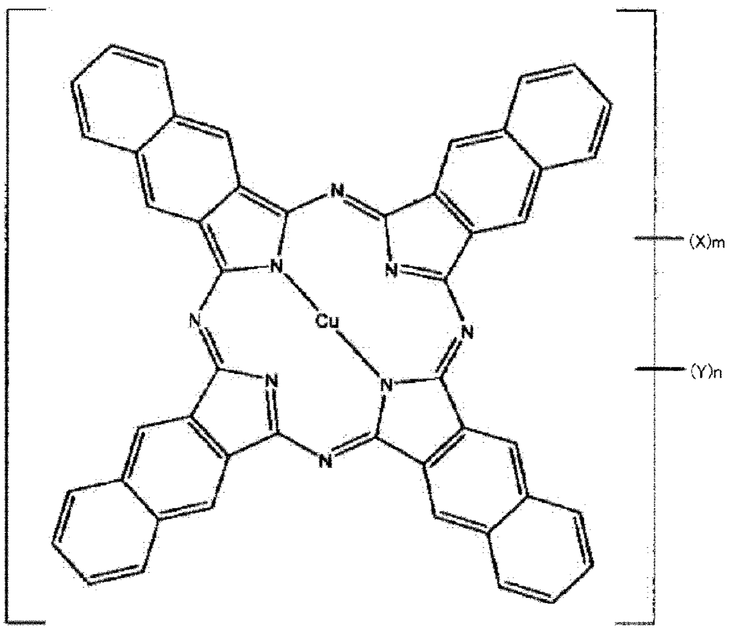

(I)

wherein in Formula (I), X and Y each independently represent a lower alkyl group, a lower alkoxy group, a substituted amino group, a nitro group, a halogen group, a hydroxy group, a carboxy group, a sulfonic acid group, or a sulfonamide group; m and n are both average values, and m and n each represent a value of 0 or more and 12 or less, while the sum of m and n has a value of 0 or more and 12 or less;

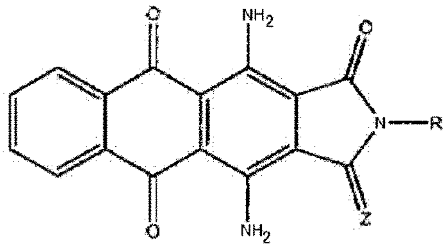

(II)

wherein in Formula (II), Z represents an oxygen atom or a sulfur atom; and R represents an atom or a functional group selected from a group consisting of a hydrogen atom, a substituted or unsubstituted aliphatic hydrocarbon group, an alicyclic hydrocarbon group, an aromatic hydrocarbon group, a hydrocarbon oxy group, and an ester group.

**16.** (Amended) The infrared-shielding sheet according to any one of claims 1 to 7 and 9 to 15, wherein the infrared-shielding sheet further comprises a transparent support, and the laminated film and the infrared-absorbent pigment layer are formed on the transparent support.

**17.** (Amended) A method for producing the infrared-shielding sheet according to any one of claims 1 to 7 and 9 to 16, the method comprising a step of forming the high-refractive index resin layers, the low-refractive index resin layers, and the infrared-absorbent pigment layer by coating.

**18.** (Amended) An interlayer film for a laminated glass, the interlayer film comprising the infrared-shielding sheet according to any one of claims 1 to 7 and 9 to 16; and an interlayer film formed on at least one outermost layer of the infrared-shielding sheet.

**19.** The interlayer film for a laminated glass according to claim 18, wherein the interlayer film contains polyvinyl butyral.

**20.** A laminated glass, comprising the interlayer film for a laminated glass according to claim 18 or 19; and a plurality of glass plates,
wherein the interlayer film for a laminated glass is inserted between a plurality of the glass plates.

**21.** The laminated glass according to claim 20, wherein at least one of the glass plates is a green glass.

**22.** The laminated glass according to claim 20 or 21, wherein the green glass has a visible light transmittance 70% or greater and 90% or less.

**23.** The laminated glass according to any one of claims 20 to 22, wherein the laminated glass has a visible light transmittance of 70% or greater and a b* value in the L*a*b* color system of 10 or less.

**24.** A window member comprising the laminated glass according to any one of claims 20 to 23.

**Statement under Art. 19.1 PCT**

An amendment of adding the requirement of claim 8, "at least one layer of the low-refractive index resin layers includes fine particles of at least one selected from a group consisting of tin oxide, indium oxide, zinc oxide, and tungsten oxide, the fine particles possibly being doped with a third component or possibly having an oxygen defect incorporated therein", to claim 1 was made. This amendment is based on the descriptions of paragraphs [0011] and [0037] of the specification submitted at the time of filing.

Claim 8 was canceled.

Claim 9 was intended to refer to any one of claims 1 to 8; however, since claim 8 was deleted, an amendment was made such that reference is made to any one of claims 1 to 7.

Claim 10 was intended to refer to any one of claims 1 to 9; however, since claim 8 was deleted, an amendment was made such that reference is made to any one of claims 1 to 7 and 9.

Claim 12 was intended to refer to any one of claims 8 to 10; however, since the requirement of claim 8 was added to claim 1 and claim 8 was deleted, an amendment was made such that reference is made to any one of claims 1 to 7, 9 and 10.

Claim 13 was intended to refer to any one of claims 1 to 12; however, since claim 8 was deleted, an amendment

was made such that reference is made to any one of claims 1 to 7 and 9 to 12.

Claim 14 was intended to refer to any one of claims 1 to 13; however, since claim 8 was deleted, an amendment was made such that reference is made to any one of claims 1 to 7 and 9 to 13.

Claim 15 was intended to refer to any one of claims 1 to 14; however, since claim 8 was deleted, an amendment was made such that reference is made to any one of claims 1 to 7 and 9 to 14.

Claim 16 was intended to refer to any one of claims 1 to 15; however, since claim 8 was deleted, an amendment was made such that reference is made to any one of claims 1 to 7 and 9 to 15.

Claim 17 was intended to refer to any one of claims 1 to 16; however, since claim 8 was deleted, an amendment was made such that reference is made to any one of claims 1 to 7 and 9 to 16.

Claim 18 was intended to refer to any one of claims 1 to 16; however, since claim 8 was deleted, an amendment was made such that reference is made to any one of claims 1 to 7 and 9 to 16.

[Figure 1]

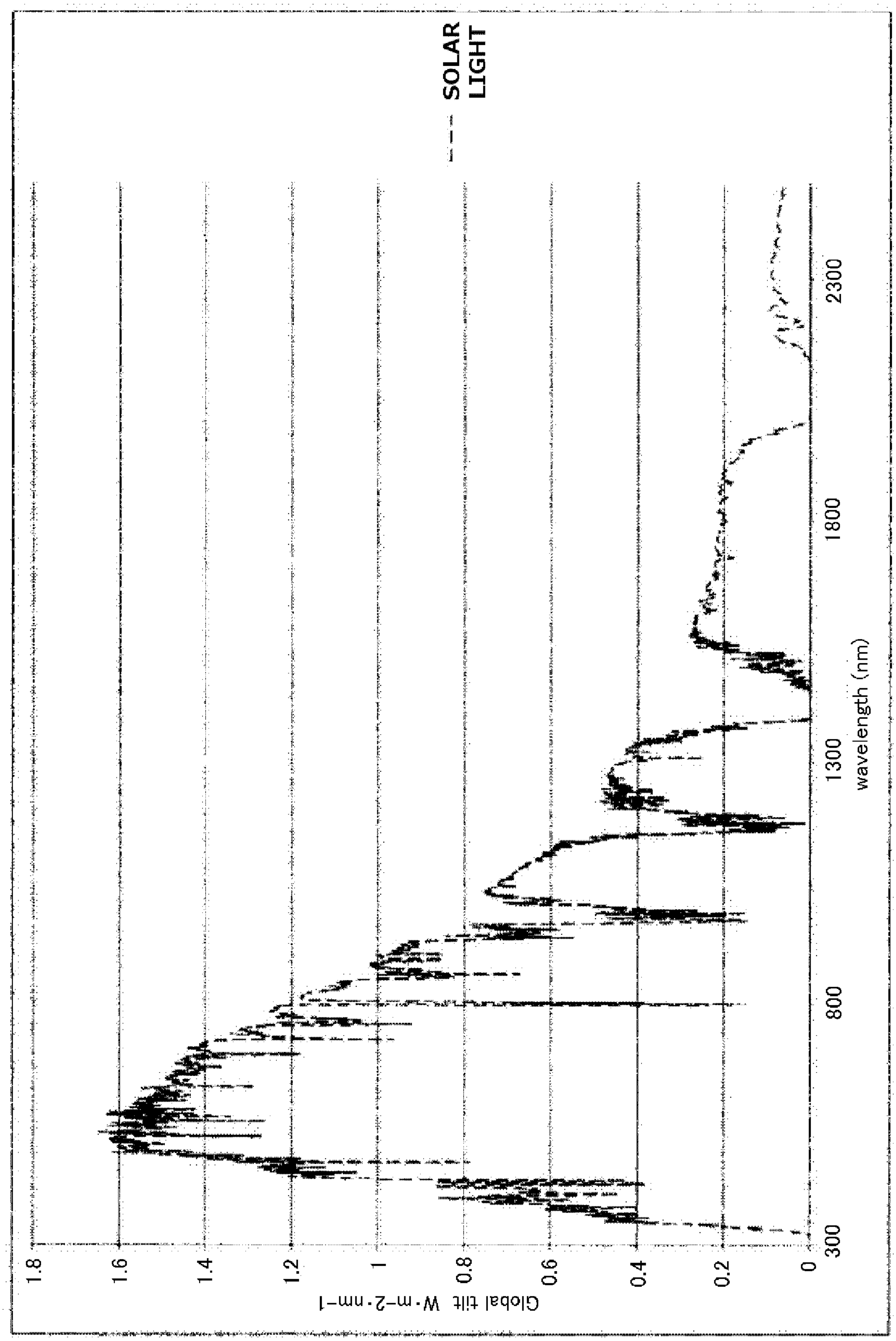
SOLAR LIGHT
Global tilt W·m-2·nm-1
wavelength (nm)
1.8
1.6
1.4
1.2
1
0.8
0.6
0.4
0.2
0
300
800
1300
1800
2300

[Figure 2]

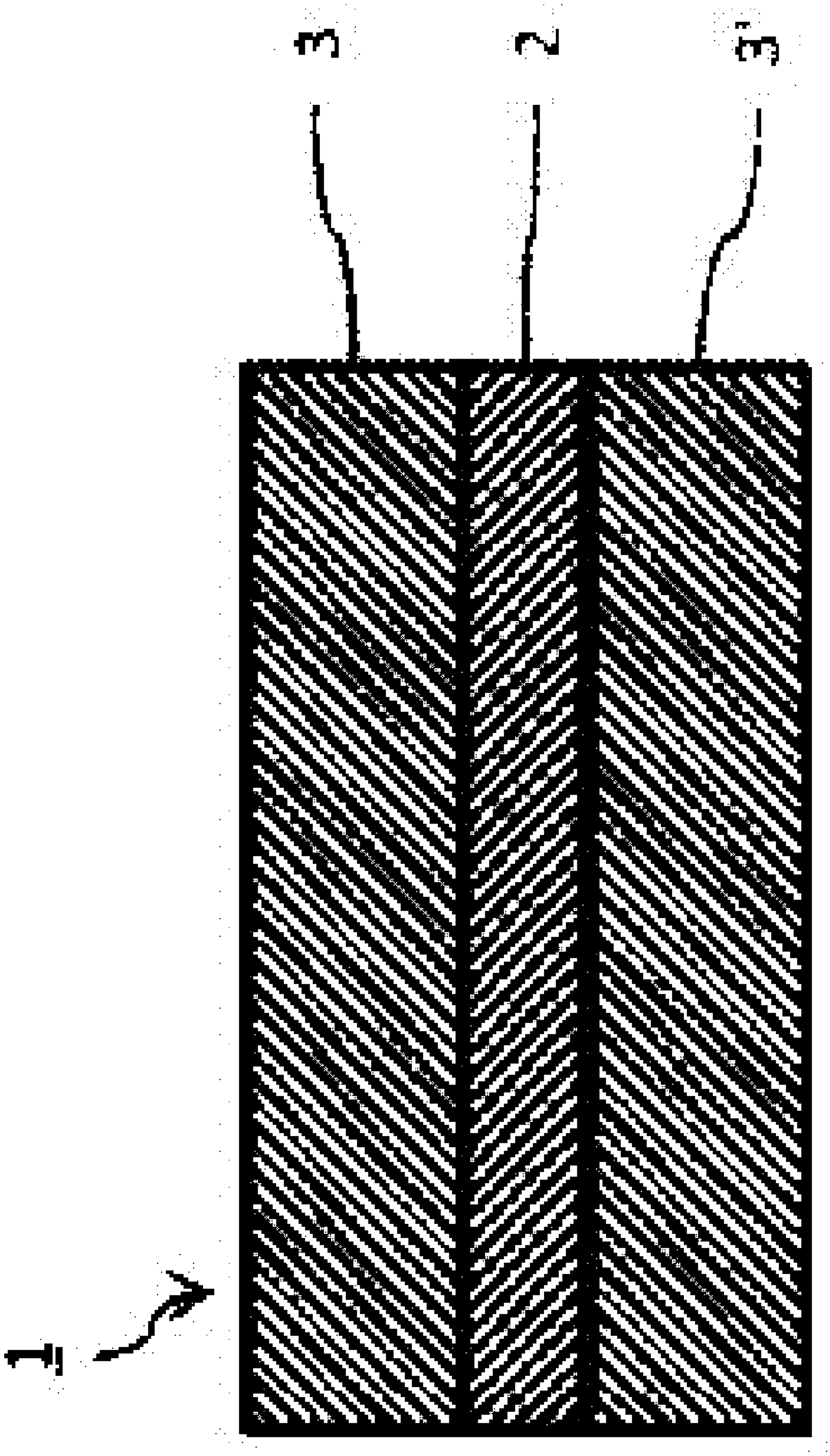

[Figure 3]

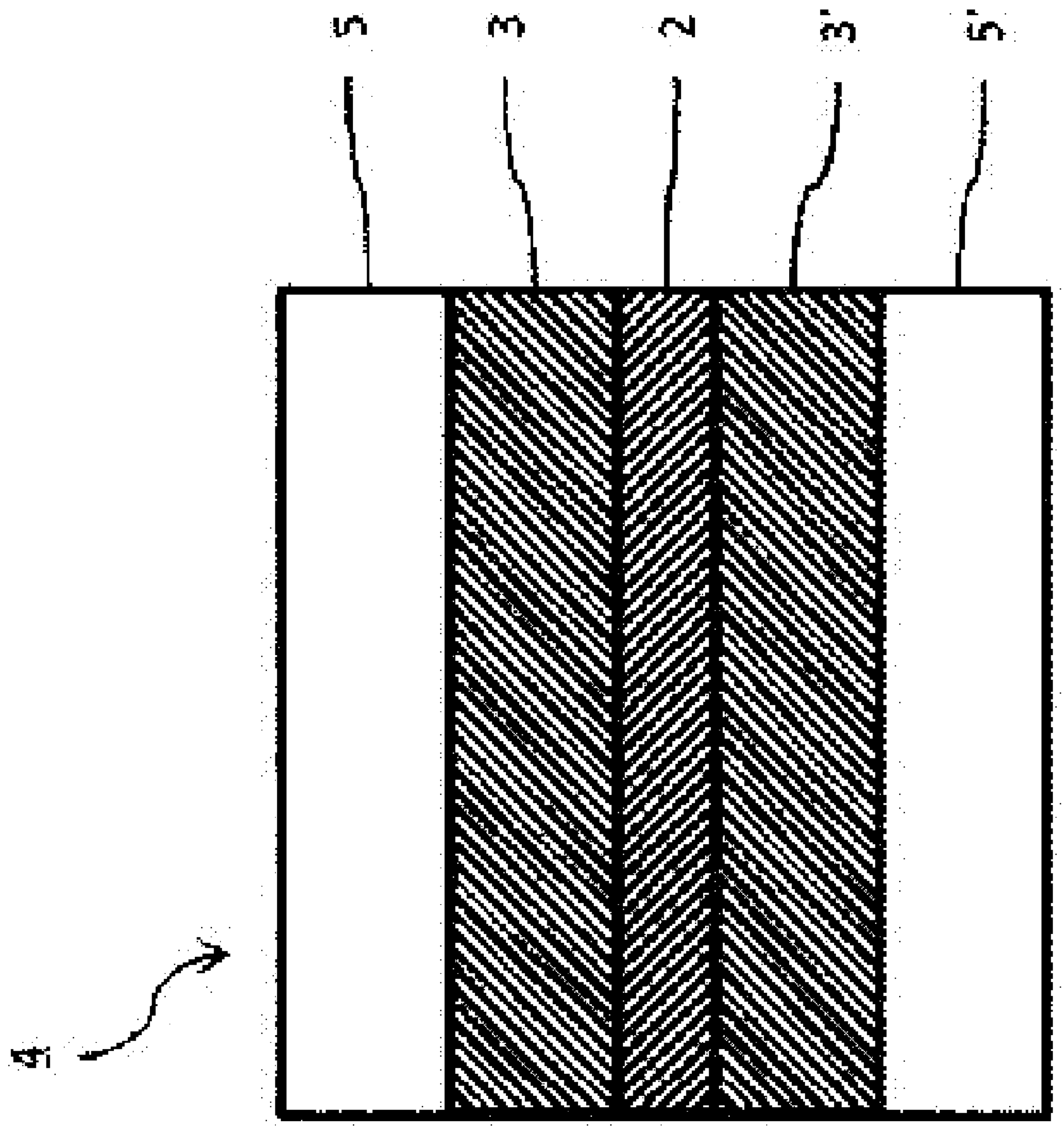

[Figure 4]

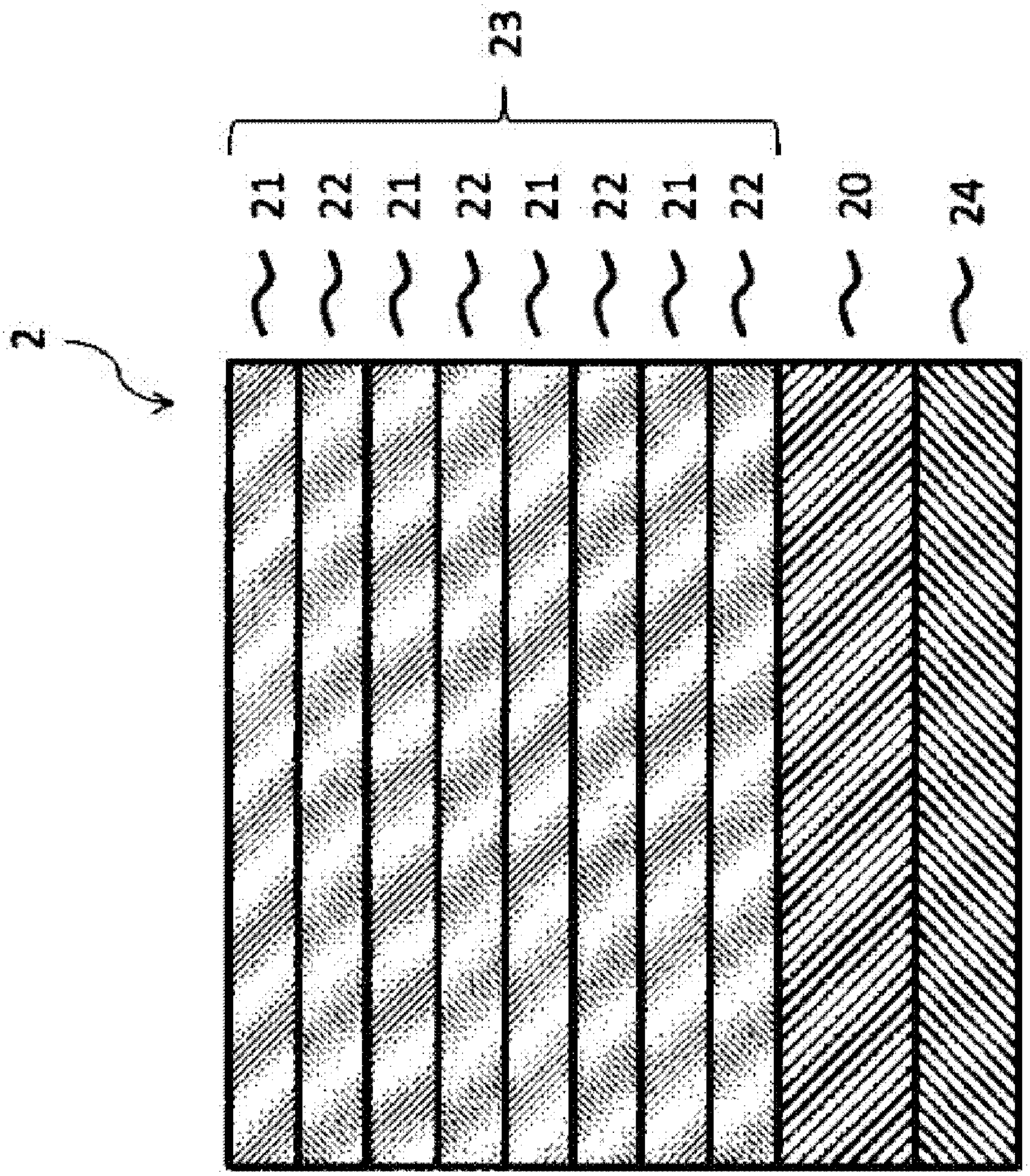

## INTERNATIONAL SEARCH REPORT

International application No.
PCT/JP2017/020264

A. CLASSIFICATION OF SUBJECT MATTER
*G02B5/28*(2006.01)i, *B32B7/02*(2006.01)i, *B32B27/20*(2006.01)i, *B60J1/00*(2006.01)i, *C03C27/12*(2006.01)i, *G02B5/22*(2006.01)i

According to International Patent Classification (IPC) or to both national classification and IPC

B. FIELDS SEARCHED

Minimum documentation searched (classification system followed by classification symbols)
G02B5/28, B32B7/02, B32B27/20, B60J1/00, C03C27/12, G02B5/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2014/199872 A1 (Konica Minolta, Inc.), 18 December 2014 (18.12.2014), paragraphs [0015] to [0021], [0027], [0046] to [0117], [0140] to [0144], [0159], [0230], [0240] to [0241], [0243] to [0246] (Family: none) | 1-7,13-14, 16-20,24<br>8-12,15, 21-23 |
| Y | JP 2016-090976 A (Konica Minolta, Inc.), 23 May 2016 (23.05.2016), paragraphs [0019] to [0020] (Family: none) | 8-12 |
| Y | JP 2000-044883 A (Mitsubishi Chemical Corp.), 15 February 2000 (15.02.2000), paragraphs [0009] to [0010], [0023] (Family: none) | 15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 August 2017 (08.08.17) | 22 August 2017 (22.08.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No.
PCT/JP2017/020264

C (Continuation). DOCUMENTS CONSIDERED TO BE RELEVANT

| Category* | Citation of document, with indication, where appropriate, of the relevant passages | Relevant to claim No. |
|---|---|---|
| Y | JP 62-165646 A (Mitsubishi Electric Corp.), 22 July 1987 (22.07.1987), page 3, upper right column, line 10 to lower left column, line 2 & US 5910393 A1 column 4, lines 21 to 49 & WO 1988/009958 A1 | 15 |
| Y | JP 2002-509279 A (Minnesota Mining and Manufacturing Co.), 26 March 2002 (26.03.2002), paragraph [0101] & US 6049419 A1 column 27, lines 59 to 63 & US 6451414 B1 & JP 5088988 B2 & WO 1999/036808 A1 & EP 1055140 A1 & CN 1285922 A | 21-23 |
| A | JP 2015-230477 A (Konica Minolta, Inc.), 21 December 2015 (21.12.2015), entire text (Family: none) | 1-24 |
| A | JP 2007-148330 A (Central Glass Co., Ltd.), 14 June 2007 (14.06.2007), entire text; all drawings & US 2009/0237782 A1 entire text; all drawings & WO 2007/049478 A1 & EP 1942356 A1 & TW 200732265 A | 1-24 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002220262 A
- WO 2007020791 A
- JP 2010202465 A
- JP 2015127274 A
- JP 2014224921 A
- JP 2012093481 A
- JP 6000926 A
- JP 2007008797 A
- JP 8207459 A